# EUROPÄISCHE PATENTSCHRIFT

(11) **EP 4 163 703 B1**
(45) Veröffentlichungstag und Bekanntmachung des Hinweises auf die Patenterteilung: **22.04.2026**
(21) Anmeldenummer: 22200045.7
(22) Anmeldetag: 06.10.2022
(51) Int. Cl.: G02B 30/27, G02F 1/1335, G06F 3/14, G09F 9/302, G09F 9/33, H04N 5/222, H04N 5/262

(54) **HINTERGRUND-WIEDERGABEEINRICHTUNG**
BACKGROUND REPRODUCING DEVICE
DISPOSITIF DE REPRODUCTION D'ARRIÈRE-PLAN

(30) Priorität: 11.10.2021 DE 102021126315
(43) Veröffentlichungstag der Anmeldung: 12.04.2023
(73) Patentinhaber: Arnold & Richter Cine Technik GmbH & Co. Betriebs KG, 80807 München (DE)
(72) Erfinder: POPP, Hermann, 81547 München (DE)
(74) Vertreter: Manitz Finsterwald Patent- und Rechtsanwaltspartnerschaft mbB

(56) Entgegenhaltungen:
- WO-A1-2020/097212
- US-A- 6 014 259
- US-B2- 10 616 562
- ZHOU ZHONG ET AL: "Light field projection for lighting reproduction", 2015 IEEE VIRTUAL REALITY (VR), IEEE, 23 March 2015 (2015-03-23), pages 135 - 142, XP033208932, DOI: 10.1109/VR.2015.7223335
- ANONYMOUS: "The DARK BAYVirtual Production Stage was built to provide film and television series productions with a", ARRI, 10 June 2021 (2021-06-10), pages 1 - 10, XP055974820, Retrieved from the Internet <URL:https://www.arri.com/news-en/arri-supported-the-creation-of-the-dark-bay-virtual-production-stage> [retrieved on 20221026]

## Beschreibung

Die Erfindung betrifft eine Hintergrund-Wiedergabeeinrichtung für ein virtuelles Bildaufnahmestudio, welche dazu ausgebildet ist, hinter einem realen Motiv eine Darstellung eines virtuellen Hintergrunds für eine Kameraaufnahme wiederzugeben.

Beispielsweise ist eine Hintergrund-Wiedergabeeinrichtung für ein virtuelles Bildaufnahmestudio in WO 2020/097212 A1 beschrieben. US 6 014 259 A und US 10 616 562 B2 beschreiben Systeme zur Wiedergabe von Bildern derart, dass bei direkten Beobachtern der Eindruck eines dreidimensionalen Bildes entsteht. US 10 616 562 B2 offenbart zudem Möglichkeiten, mittels eines Displays verschiedene Inhalte für verschiedene das Display beobachtende Beobachter wiederzugeben.

Derartige Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine virtuelle Umgebung geschaffen werden, in welcher sich ein Schauspieler während einer Bewegtbildaufnahme bewegen oder welche einen Hintergrund für eine Stillbildaufnahme bilden kann. Der im vorliegenden Zusammenhang genannte virtuelle Hintergrund kann insbesondere ein Hintergrundmotiv repräsentieren, dessen Darstellung von einer zugeordneten Kamera als scheinbar reale Umgebung einer (Vordergrund)Szene unmittelbar aufgenommen werden kann. Die Darstellung des virtuellen Hintergrunds "hinter" einem realen Motiv ist in diesem Zusammenhang umfassend zu verstehen, da die virtuelle Umgebung auch oberhalb oder unterhalb des realen Motivs vorgesehen sein kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von Bildpunktelementen umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über oder unter dem realen Motiv in dem virtuellen Bildaufnahmestudio angeordnet werden, um auch das unmittelbare Aufnehmen einer Darstellung eines virtuellen Himmels, oder einer virtuellen Decke eines Raums oder eines virtuellen Bodens in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Insbesondere kann es eine derartige Hintergrund-Wiedergabeeinrichtung ermöglichen, durch entsprechendes Ansteuern der Bildpunktelemente einen virtuellen Hintergrund, der insbesondere eine dreidimensionale Szene repräsentieren kann, bildlich dazustellen und/oder durch Verändern der Ansteuerung während einer Aufnahme anzupassen. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Während durch Ansteuern der Bildpunktelemente einer solchen Hintergrund-Wiedergabeeinrichtungen somit grundsätzlich beliebige Darstellung eines virtuellen Hintergrunds und beispielsweise auch eine sich verändernde Darstellung eines virtuellen Hintergrunds in dem virtuellen Bildaufnahmestudio unmittelbar für eine Aufnahme mittels einer zugeordneten Kamera wiedergegeben werden kann, ist eine Strahlcharakteristik des von den Bildpunktelementen und somit der Hintergrund-Wiedergabeeinrichtung emittierten Lichts meist festgelegt und kann im Wesentlichen durch den Aufbau der Hintergrund-Wiedergabeeinrichtung und einen jeweiligen Typ der daran angeordneten Bildpunktelemente vorgegeben sein. Hierdurch wird jedoch der Gestaltungsspielraum im Hinblick auf das Wiedergeben von Darstellungen virtueller Hintergründe in einem virtuellen Bildaufnahmestudio eingeschränkt, da die Strahlcharakteristik beispielsweise nicht an verschiedene Aufnahmesituationen angepasst werden kann. Dementsprechend kann bei der Nutzung derartiger Hintergrund-Wiedergabeeinrichtungen auch die Problematik entstehen, dass bestimmte Hintergrund-Wiedergabeeinrichtungen für gewisse Aufnahmesituationen nicht oder jedenfalls nicht optimal geeignet sind und/oder aufwendige nachträgliche Bearbeitungen des aufgenommenen Bildmaterials erforderlich sind.

Es ist daher eine Aufgabe der Erfindung, eine Hintergrund-Wiedergabeeinrichtung zu schaffen, mittels derer eine Darstellung eines virtuellen Hintergrunds mit einer variablen und/oder einstellbaren Strahlcharakteristik wiedergebbar ist.

Diese Aufgabe wird gelöst durch eine Hintergrund-Wiedergabeeinrichtung mit den Merkmalen des Anspruchs 1.

Die Hintergrund-Wiedergabeeinrichtung weist eine aktive Beleuchtungseinrichtung auf, welche zumindest ein Paneel mit einer Vielzahl von Bildpunktelementen in einer zumindest zweidimensionalen Anordnung umfasst. Ferner umfasst die Hintergrund-Wiedergabeeinrichtung eine Steuereinrichtung und eine steuerbare Linsenanordnung, wobei die Steuereinrichtung dazu ausgebildet ist, die aktive Beleuchtungseinrichtung zum Wiedergeben der Darstellung des virtuellen Hintergrunds anzusteuern. Darüber hinaus ist die Steuereinrichtung dazu ausgebildet, eine Strahlcharakteristik zumindest einiger der Vielzahl von Bildpunktelementen durch Ansteuern der Linsenanordnung zu verändern.

Die Hintergrund-Wiedergabeeinrichtung weist somit zunächst eine Steuereinrichtung auf, mittels derer die aktive Beleuchtungseinrichtung steuerbar ist, um die Darstellung des virtuellen Hintergrunds in dem virtuellen Bildaufnahmestudio für eine Kameraaufnahme wiederzugeben und eine unmittelbare Abbildung der Darstellung des virtuellen Hintergrunds durch eine zugeordnete Kamera erzeugen zu können. Dadurch kann die Darstellung des virtuellen Hintergrunds und/oder der virtuelle Hintergrund insbesondere in einer von der zugeordneten Kamera erzeugten Abbildung als Hintergrund enthalten sein, um beispielsweise eine Umgebung für eine Szene oder Bewegtbildsequenz zu bilden, die in dem virtuellen Bildaufnahmestudio aufgenommen wird. Insbesondere muss ein solcher Hintergrund daher nicht nachträglich zu der von der Kamera erzeugten Abbildung hinzugefügt werden.

Indem die Hintergrund-Wiedergabeeinrichtung darüber hinaus eine Linsenanordnung aufweist, welche ebenfalls mittels der Steuereinrichtung steuerbar ist, wird zudem eine Strahlcharakteristik zumindest einiger (insbesondere aller) der Vielzahl von Bildpunktelementen verändert und/oder angepasst. Beispielsweise kann es vorgesehen sein, dass die Steuereinrichtung dazu ausgebildet ist, durch Ansteuern der Linsenanordnung von zumindest einigen der Bildpunktelemente emittiertes Licht aufzuweiten und/oder zu fokussieren, um dadurch beispielsweise eine insgesamt aufgeweitete Strahlcharakteristik des von der Hintergrund-Wiedergabeeinrichtung emittierten Lichts und/oder eine fokussierte Lichtemission von der Hintergrund-Wiedergabeeinrichtung oder von Abschnitten der Hintergrund-Wiedergabeeinrichtung zu erreichen.

Beispielsweise kann es in bestimmten Aufnahmesituation auch vorgesehen sein, die Hintergrund-Wiedergabeeinrichtung zum Beleuchten des realen Motivs zu nutzen, indem beispielsweise an bestimmten Abschnitten oder Paneelen der Hintergrund-Wiedergabeeinrichtung die Darstellung des virtuellen Hintergrunds wiedergegeben wird, während andere Abschnitte oder Paneele der Hintergrund-Wiedergabeeinrichtung zum Emittieren eines Beleuchtungslichts genutzt werden. Insbesondere kann eine solche Beleuchtung zusätzlich zu einer sonstigen Beleuchtung, beispielsweise durch Scheinwerfer, des virtuellen Hintergrunds erfolgen. Eine Aufteilung einzelner Abschnitte und/oder Paneele in zur Wiedergabe der Darstellung vorgesehene Abschnitte und zur Beleuchtung vorgesehene Abschnitte kann beispielsweise festgelegt sein, insbesondere jedoch etwa in Abhängigkeit von einer Ausrichtung und/oder Position der zugeordneten Kamera variabel angepasst werden. Durch eine entsprechende Ansteuerung der Linsenanordnung kann insbesondere auch in solchen Beleuchtungssituation eine Strahlcharakteristik der betreffenden Bildpunktelemente beeinflusst werden, um etwa eine fokussierte Beleuchtung im Sinne eines Spotlights auf das reale Motiv oder eine möglichst gleichmäßige Ausleuchtung des Bildaufnahmestudios zu ermöglichen.

Die Linsenanordnung kann beispielsweise eine Vielzahl von Linsen umfassen, welche einem jeweiligen der Vielzahl von Bildpunktelementen und/oder einer Gruppe von Bildpunktelementen zugeordnet ist, um die Strahlcharakteristik des jeweiligen Bildpunktelements durch die Linse zu beeinflussen. Durch Ansteuern der Linsenanordnung können insbesondere optische Eigenschaften derartiger Linsen beeinflussbar sein, um beispielsweise eine gewünschte Aufweitung eines von dem jeweiligen Bildpunktelement und/oder der Gruppe von Bildpunktelementen emittierten Lichtstrahls einstellen zu können. Es kann auch vorgesehen sein, dass durch das Ansteuern der Linsenanordnung eine jeweilige Linse und/oder die Linsenanordnung selektiv über einem Bildpunktelement oder über den Bildpunktelementen positionierbar oder aus dem Lichtweg des von dem Bildpunktelement oder den Bildpunktelementen emittierten Lichts entfernbar ist, um wahlweise eine Beeinflussung des von dem Bildpunktelement emittierten Lichts durch die Linse einzustellen oder eine unbeeinflusste Lichtemission zu ermöglichen.

Insbesondere kann die Vielzahl von Bildpunktelementen zudem in einem regelmäßigen Raster in der zumindest zweidimensionalen Anordnung angeordnet sein, wobei die Linsenanordnung an dieses Raster angepasst sein und beispielsweise an zumindest einigen Stellen dieses Rasters eine Linse umfassen kann, welche dem jeweiligen Bildpunktelement zugeordnet ist. Insbesondere kann die Linsenanordnung bezogen auf eine von den Bildpunktelementen ausgehende Lichtemission über den Bildpunktelementen angeordnet sein und beispielsweise in einem Rahmen über dem zumindest einen Paneel gehalten sein, um das von den Bildpunktelementen emittierte Licht mittels der Linsenanordnung beeinflussen zu können.

Um eine möglichst hoch aufgelöste Darstellung des virtuellen Hintergrunds an der Hintergrund-Wiedergabeeinrichtung wiedergeben zu können, können die Bildpunktelemente ferner insbesondere von Lichtquellen mit lediglich geringer Ausdehnung gebildet sein, um möglichst viele Bildpunktelemente dicht aneinander an dem zumindest einen Paneel anordnen zu können. Beispielsweise können die Bildpunktelemente dazu Leuchtdioden umfassen, insbesondere LED (Light Emitting Diode) oder organische Leuchtdiode (OLED - Organic Light Emitting Diode). Um eine Beeinflussung der Strahlcharakteristik solcher Bildpunktelemente kleiner Dimension zu möglichen, kann die Linsenanordnung insbesondere eine Vielzahl von Mikrolinsen umfassen, wobei eine jeweilige Mikrolinse einem jeweiligen Bildpunktelement zugeordnet sein kann, um gezielt dessen Strahlcharakteristik beeinflussen zu können. Es kann jedoch auch vorgesehen sein, dass die Linsenanordnung Linsen mit relativ zu den Bildpunktelementen größerer Ausdehnung umfasst, um mit einer jeweiligen Linse die Strahlcharakteristik mehrerer Bildpunktelemente gemeinsam zu beeinflussen.

Weitere Ausführungsformen sind den Ansprüchen, der Beschreibung und den Figuren zu entnehmen.

Bei einigen Ausführungsformen können die Hintergrund-Wiedergabeeinrichtung als eine LED-Wand und die Bildpunktelemente als Leuchtdioden oder Leuchtdiodeneinheiten ausgebildet sein. Die Leuchtdioden einer solchen LED-Wand können beispielsweise als LED (Light Emitting Diode) oder als organische Leuchtdioden bzw. OLED (Organic Light Emitting Diode) ausgebildet sein. Ferner kann es bei einer LED-Wand vorgesehen sein, dass die einzelnen Bildpunktelemente, welche gemeinsam die Darstellung des virtuellen Hintergrunds erzeugen, von einzelnen Leuchtdioden gebildet sind. Die einzelnen Bildpunktelemente können jedoch auch von jeweiligen Leuchtdiodeneinheiten gebildet sein, wobei jede Leuchtdiodeneinheit insbesondere mehrere (insbesondere zwei, drei, vier, fünf oder sechs) Leuchtdioden umfassen kann. Die mehreren Leuchtdioden einer Leuchtdiodeneinheit können insbesondere unterschiedliche Emissionsspektren aufweisen und können optional mit einem Farbmischer ausgestattet sein. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen.

Bei einigen Ausführungsformen kann es ferner vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken, insbesondere mit kontinuierlichen oder quasi-kontinuierlichen Übergängen. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen. Ferner kann es bei einigen Ausführungsformen vorgesehen sein, dass die Hintergrund-Wiedergabeeinrichtung abschnittsweise an einem Boden des virtuellen Bildaufnahmestudios angeordnet ist. Auch in solchen Abschnitten kann sich die Hintergrund-Wiedergabeeinrichtung insbesondere in einer horizontalen Ausrichtung erstrecken.

Die Hintergrund-Wiedergabeeinrichtung kann bei einigen Ausführungsformen ferner dazu ausgebildet sein, das reale Motiv zu beleuchten. Insbesondere kann die Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann.

Bei einigen Ausführungsformen kann die Hintergrund-Wiedergabeeinrichtung dazu ausgebildet sein, die Darstellung des virtuellen Hintergrunds während der Kameraaufnahme zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar und beispielsweise als Hintergrund einer Bewegtbildsequenz abgebildet werden kann. Ein nachträgliches Überlagern der Aufnahme der Kamera mit einem vorgesehenen Hintergrund ist somit nicht mehr erforderlich.

Ferner kann die aktive Beleuchtungseinrichtung bei einigen Ausführungsformen eine Breite von zumindest 5 m und eine Höhe von zumindest 2 m aufweisen. Insbesondere können/kann die aktive Beleuchtungseinrichtung und/oder die Hintergrund-Wiedergabeeinrichtung dadurch eine ausreichende Größe aufweisen, um mehrere Schauspieler vor einem gemeinsamen (virtuellen) Hintergrund aufnehmen zu können. Zudem kann es eine derart ausreichende Größe der aktiven Beleuchtungseinrichtung beispielsweise ermöglichen, verschiedene reale Objekte, beispielsweise Möbel und/oder Sitzgelegenheiten, in dem virtuellen Bildaufnahmestudio zu positionieren und beispielsweise eine Filmszene unter Einbeziehung dieser realen Objekte und/oder mit sich bewegenden Schauspielern vor der Darstellung des virtuellen Hintergrunds aufzunehmen. Insbesondere kann sich die Darstellung des virtuellen Hintergrunds und/oder die Hintergrund-Wiedergabeeinrichtung bzw. die aktive Beleuchtungseinrichtung über einen während einer typischen Aufnahme in dem virtuellen Bildaufnahmestudio, beispielsweise einer Aufnahme einer von Schauspielern gespielten Szene, von der Kamera abgebildeten Abschnitt hinaus erstrecken, so dass sich die Darstellung des virtuellen Hintergrunds beispielsweise in der von der Kamera erzeugten Abbildung bis zu sämtlichen Rändern der Abbildung erstrecken kann und nicht auf einen Innenabschnitt der Abbildung beschränkt ist.

Die Hintergrund-Wiedergabeeinrichtung kann bei einigen Ausführungsformen zumindest abschnittsweise gekrümmt und/oder gewölbt ausgebildet sein. Insbesondere kann die Hintergrund-Wiedergabeeinrichtung dazu ausgebildet sein, das reale Motiv umgebend in dem virtuellen Bildaufnahmestudio angeordnet zu werden, um beispielsweise eine Aufnahme der Darstellung des virtuellen Hintergrunds bei verschiedenen Kameraausrichtungen und/oder Positionen zu ermöglichen. So kann es beispielsweise vorgesehen sein, dass die Hintergrund-Wiedergabeeinrichtung kreisbogenförmig und in einer vertikalen Erstreckung angeordnet ist, um eine durchgehende Kameraaufnahme des virtuellen Hintergrunds für Kameraausrichtungen in einem Bereich von beispielsweise 180 Grad und/oder während eines Kameraschwenks zu ermöglichen. Zudem kann die Hintergrund-Wiedergabeeinrichtung dazu ausgebildet sein, ein reales Motiv, etwa einen Schauspieler, überwölbend angeordnet zu werden, um beispielsweise auch eine Raumdecke oder einen Himmel des virtuellen Hintergrunds wiedergegeben und mittels der Kamera über dem realen Motiv abbilden zu können.

Bei einigen Ausführungsformen kann der virtuelle Hintergrund eine dreidimensionale Szene repräsentieren. Beispielsweise kann es sich bei dem virtuellen Hintergrund um eine Landschaft oder einen Raum handeln, in welcher oder in welchem eine in dem virtuellen Bildaufnahmestudio aufzunehmende Szene spielt. Insbesondere kann die an der Hintergrund-Wiedergabeeinrichtung wiedergegebene Darstellung des virtuellen Hintergrunds und/oder ein an dem zumindest einen Paneel wiedergegebener Abschnitt der Darstellung des virtuellen Hintergrunds einer Projektion der dreidimensionalen Szene bzw. eines Abschnitts der dreidimensionalen Szene auf die zweidimensionale Anordnung der Bildpunktelemente entsprechen.

Die Steuereinrichtung kann bei einigen Ausführungsformen dazu ausgebildet sein, die Bildpunktelemente des Paneels individuell und/oder in Gruppen benachbarter Bildpunktelemente zum Wiedergeben der Darstellung des virtuellen Hintergrunds anzusteuern. Beispielsweise kann die Steuereinrichtung unmittelbar mit den Bildpunktelementen des zumindest einen Paneels verbunden sein, um die Bildpunktelemente individuell zum Wiedergeben einer jeweiligen Bildinformation anzusteuern, welche beispielsweise einer Helligkeit und/oder einem Farbwert eines mittels des Bildpunktelements wiederzugebenden Bildpunkts der Darstellung des virtuellen Hintergrunds entsprechen kann. Es kann jedoch auch vorgesehen sein, dass die Steuereinrichtung dazu ausgebildet ist, eine oder mehrere Bildinformationen für eine Gruppe benachbarter Bildpunktelemente zu übertragen, welche mittels der Bildpunktelemente wiedergegeben werden kann. Beispielsweise kann die Steuereinrichtung dazu mit einem Treiber und/oder einem Treiber-Chip verbunden sein, wobei der Treiber und/oder der Treiber-Chip dazu ausgebildet sein kann, die Bildpunktelemente einer jeweiligen Gruppe von Bildpunktelementen individuell anzusteuern. Insofern kann die Steuereinrichtung insbesondere dazu ausgebildet sein, jeweilige Bildinformationen für die Bildpunktelemente einer Gruppe von Bildpunktelementen an einen solchen Treiber und/oder Treiber-Chip zu übertragen, wobei der Treiber und/oder der Treiber-Chip dazu ausgebildet sein kann, die jeweiligen Bildinformationen auf die Bildpunktelemente zu verteilen und die Bildpunktelemente individuell zum Wiedergeben einer jeweiligen Bildinformation anzusteuern.

Bei einigen Ausführungsformen kann die Steuereinrichtung einen Mikrocontroller, einen Mikroprozessor und/oder eine CPU (Central Processing Unit) umfassen. Zudem kann die Steuereinrichtung beispielsweise mehrere Mikrocontroller oder Mikroprozessoren umfassen, wobei die Steuerung der Bildpunktelemente zum Wiedergeben der Darstellung des virtuellen Hintergrunds beispielsweise über einen der mehreren Mikrocontroller oder Mikroprozessoren erfolgen kann, während ein anderer der mehreren Mikrocontroller oder Mikroprozessoren dazu ausgebildet sein kann, die Linsenanordnung anzusteuern. Bei einer derartigen Ausbildung mit mehreren Mikrocontrollern oder Mikroprozessoren kann jedoch eine Kommunikation zwischen den Mikrocontrollern oder Mikroprozessoren vorgesehen sein, um etwa die Ansteuerung der Linsenanordnung in Abhängigkeit von einer Ansteuerung der Bildpunktelemente durchführen zu können. Es kann jedoch auch vorgesehen sein, dass die Steuereinrichtung einen einzigen Mikrocontroller, Mikroprozessor und/oder eine einzige CPU umfasst, über welchen bzw. welche sowohl die Bildpunktelemente als auch die Linsenanordnung steuerbar ist. Darüber hinaus kann die Steuereinrichtung von einer einzigen physischen Einheit gebildet oder auf mehrere voneinander getrennte, jedoch insbesondere signaltechnisch miteinander verbundene, physische Einheiten verteilt sein.

Die Steuereinrichtung kann bei einigen Ausführungsformen dazu ausgebildet sein, die Linsenanordnung elektrisch anzusteuern. Beispielsweise kann die Linsenanordnung durch ein elektrisches Signal dazu ansteuerbar sein, Positionen und/oder Ausrichtungen und/oder Formen von zumindest einer Linse, welche über zumindest einem Bildpunktelement angeordnet ist, zu verändern, um dadurch die Strahlcharakteristik des zumindest einen Bildpunktelements anzupassen.

Ferner kann die Linsenanordnung insbesondere durch Anlegen eines elektrischen Feldes ansteuerbar sein. Beispielsweise kann die Linsenanordnung eine Vielzahl von Mikrolinsen umfassen, wobei solche Mikrolinsen insbesondere durch geringe elektrische Spannungen verstellbar sein können. Dies kann es ermöglichen, Einstellungen der Mikrolinsen, beispielsweise eine Brennweite und/oder einen Fokuswert einer Linse, durch lediglich geringfügiges Verändern des anliegenden elektrischen Feldes und/oder der elektrischen Spannung und daher schnell anzupassen, um die Einstellungen flexibel während einer Aufnahme in dem virtuellen Bildaufnahmestudio verändern zu können. Insbesondere kann die Linsenanordnung innerhalb einiger Millisekunden, beispielsweise innerhalb von 10 Millisekunden oder innerhalb von 20 Millisekunden, ansteuerbar sein, so dass gegebenenfalls eine bildsynchrone Ansteuerung der Linsenanordnung vorgenommen werden kann. So kann die Linsenanordnung etwa bei einer Wiedergabe zeitlich variierender Darstellungen des virtuellen Hintergrunds für jede wiedergegebene Darstellung individuell ansteuerbar sein.

Bei einigen Ausführungsformen kann die Steuereinrichtung dazu ausgebildet sein, die aktive Beleuchtungseinrichtung dazu anzusteuern, die wiedergegebene Darstellung des virtuellen Hintergrunds mit einer Bildaktualisierungsfrequenz zu verändern. Zudem kann die Steuereinrichtung bei solchen Ausführungsformen dazu ausgebildet sein, die Linsenanordnung entsprechend der Bildaktualisierungsfrequenz - und somit für jede wiedergegebene Darstellung individuell - anzusteuern.

Die Hintergrund-Wiedergabeeinrichtung ist ferner erfindungsgemäß dazu ausgebildet, zeitlich variierende Darstellungen des virtuellen Hintergrunds wiederzugeben, um die Darstellung an sich verändernde Positionen einer Kamera, mit welcher eine Szene in dem virtuellen Bildaufnahmestudio aufgenommen wird, anzupassen. Dies kann mit einer vorgegebenen und/oder einstellbaren Bildaktualisierungsfrequenz erfolgen, so dass die wiedergegebene Darstellung beispielsweise durch entsprechendes Ansteuern der aktiven Beleuchtungseinrichtung und/oder der Bildpunktelemente mit einer Bildaktualisierungsfrequenz von 24 Hertz, 48 Hertz oder 96 Hertz während einer Aufnahme in dem virtuellen Bildaufnahmestudio verändert werden kann. Mit der Bildaktualisierungsfrequenz kann folglich die mittels der aktiven Beleuchtungseinrichtung an der Hintergrund-Wiedergabeeinrichtung wiedergegebene Bildinformation aktualisiert werden. Indem die Steuereinrichtung dazu ausgebildet ist, die Linsenanordnung entsprechend der Bildaktualisierungsfrequenz für jede wiedergegebene Darstellung individuell anzusteuern, kann für jede wiedergegebene Darstellung auch eine individuelle Strahlcharakteristik eingestellt werden.

Die Linsenanordnung kann dazu insbesondere ebenfalls mit der Bildaktualisierungsfrequenz ansteuerbar sein, wobei die Steuereinrichtung beispielsweise dazu ausgebildet sein kann, die Linsenanordnung und die aktive Beleuchtungseinrichtung parallel anzusteuern. Dadurch können die Einstellungen der Linsenanordnung angepasst werden bzw. die Anpassung kann zumindest begonnen werden, während die jeweilige wiederzugebende Darstellung an der Hintergrund-Wiedergabeeinrichtung aufgebaut wird. Durch die Möglichkeit, die Linsenanordnung etwa im Zuge einer elektrischen Ansteuerung schnell und beispielsweise innerhalb einiger Millisekunden anzusteuern bzw. Einstellungen der Linsenanordnung innerhalb einiger Millisekunden anzupassen, können die Einstellungen der Linsenanordnung bereits an die jeweilige Darstellung angepasst sein, wenn die Darstellung an der Hintergrund-Wiedergabeeinrichtung aufgebaut ist und/oder sobald eine Aufnahme mit der zugeordneten Kamera erfolgt. Insbesondere ermöglicht es eine derart schnelle Ansteuerung der Linsenanordnung auch, deren Einstellungen während einer Belichtungspause der zugeordneten Kamera und dementsprechend zu einer Zeit, zu welcher keine Aufnahme erzeugt wird, zu verändern, so dass die korrekten Einstellungen vorliegen, sobald eine Aufnahme durchgeführt wird. Hierzu kann auch eine Synchronisation zwischen der Kamera und der Hintergrund-Wiedergabeeinrichtung vorgesehen sein.

Um eine solche bildsynchrone Ansteuerung der Linsenanordnung zu erreichen, kann die Steuereinrichtung dazu ausgebildet sein, für jedes Bildpunktelement einen Steuerbefehl zu generieren, welcher insbesondere dessen Helligkeit und/oder Farbe betreffen kann, und gleichzeitig einen Ansteuerungsbefehl für die Linsenanordnung zu generieren, um die Strahlcharakteristik der Bildpunktelemente anzupassen. Eine Veränderung der Darstellung des virtuellen Hintergrunds, insbesondere jede Veränderung der Darstellung, kann daher bei einigen Ausführungsformen eine Veränderung der Ansteuerung der Bildpunktelemente und eine Veränderung der Ansteuerung der Linsenanordnung umfassen. Wie nachstehend noch näher erläutert ist, kann jedem Bildpunktelement insbesondere eine jeweilige Linse zugeordnet sein, so dass die Steuereinrichtung bei einigen Ausführungsformen dazu ausgebildet sein kann, für jede wiederzugebende Darstellung einen jeweiligen Steuerbefehl für jedes der Bildpunktelemente und einen jeweiligen Ansteuerungsbefehl für jede der Linsen zu generieren.

Die Linsenanordnung kann bei einigen Ausführungsformen eine Vielzahl von Linsen umfassen, wobei jede Linse zumindest einem jeweiligen Bildpunktelement zugeordnet sein kann. Insbesondere kann bei einigen Ausführungsformen jede Linse genau einem jeweiligen Bildpunktelement zugeordnet sein (beispielsweise einer Leuchtdiode oder einer Leuchtdiodeneinheit, wie vorstehend erläutert). Somit kann durch Ansteuern der Linsenanordnung die Strahlcharakteristik der individuellen Bildpunktelemente beeinflusst werden. Alternativ hierzu kann jede der Linsen mehreren Bildpunktelementen zugeordnet sein (beispielsweise mehreren Leuchtdioden oder mehreren Leuchtdiodeneinheiten), so dass durch Ansteuern einer jeweiligen Linse die Strahlcharakteristik der mehreren zugeordneten Bildpunktelemente kollektiv eingestellt werden kann.

Bei einigen Ausführungsformen kann jede der Linsen individuell ansteuerbar sein, um für das Bildpunktelement oder die Bildpunktelemente, welchem bzw. welchen eine Linse zugeordnet ist, eine Strahlcharakteristik individuell zu beeinflussen. Bei anderen Ausführungsformen kann vorgesehen sein, dass mehrere der Vielzahl von Linsen mittels der Steuereinrichtung kollektiv ansteuerbar ist, um die Strahlcharakteristik der zugeordneten Bildpunkte gemeinsam und in gleicher Weise anzupassen. Beispielsweise kann durch eine solche kollektive Ansteuerung von der Hintergrund-Wiedergabeeinrichtung emittiertes Licht insgesamt aufgeweitet werden oder es kann eine Fokussierung des emittierten Lichts auf einen bestimmten Punkt, beispielsweise das reale Motiv, erfolgen, um eine entsprechend fokussierte Beleuchtung des realen Motivs zu erreichen. Eine Zuordnung der mehreren Linsen zu einer solchen kollektiven Ansteuerung kann vorbestimmt oder variabel sein.

Bei einigen Ausführungsformen kann jedem Bildpunktelement eine jeweilige Linse zugeordnet sein. Insbesondere kann somit durch Ansteuern der Linsenanordnung eine Strahlcharakteristik jedes Bildpunktelements der Vielzahl von Bildpunktelementen veränderbar und/oder anpassbar sein. Wiederum kann dabei grundsätzlich eine individuelle Ansteuerung jeder Linse der Linsenanordnung oder eine kollektive Ansteuerung vorgesehen sein, um die Strahlcharakteristik jedes Bildpunktelements individuell oder die Strahlcharakteristik der Vielzahl von Bildpunktelementen kollektiv anpassen zu können.

Bei einigen Ausführungsformen kann die Steuereinrichtung dazu ausgebildet sein, jede der Vielzahl von Linsen individuell anzusteuern. Insbesondere kann die Steuereinrichtung somit dazu ausgebildet sein, durch Ansteuern der Linsenanordnung eine Strahlcharakteristik für jedes Bildpunktelement, dem eine jeweilige Linse zugeordnet ist, individuell anzupassen. Durch eine solche Ansteuerung kann insbesondere der Gestaltungsspielraum bei der Nutzung einer Hintergrund-Wiedergabeeinrichtung zum Wiedergeben einer Darstellung eines virtuellen Hintergrunds erweitert und die Strahlcharakteristik der Hintergrund-Wiedergabeeinrichtung beispielsweise abschnittsweise eingestellt werden, um in Abhängigkeit von einer jeweiligen Aufnahmesituation eine möglichst optimale Wiedergabe der Darstellung des virtuellen Hintergrunds und/oder Abbildung der Darstellung des virtuellen Hintergrunds mittels der zugeordneten Kamera und/oder Beleuchtung des realen Motivs zu ermöglichen. Beispielsweise kann es bei einer solchen Ansteuerung vorgesehen sein, die Bildpunktelemente eines Abschnitts der Hintergrund-Wiedergabeeinrichtung wahlweise zum Beleuchten des realen Motivs zu nutzen, wobei das von diesen Bildpunktelementen emittierte Licht beispielsweise auf das reale Motiv fokussiert werden kann. In weiteren Abschnitten der Hintergrund-Wiedergabeeinrichtung kann hingegen die Darstellung des virtuellen Hintergrunds wiedergegeben werden und das von den dazu genutzten Bildpunktelementen emittierte Licht kann durch entsprechendes Ansteuern der Linsenanordnung und/oder der jeweiligen Linsen beispielsweise aufgeweitet werden.

Insbesondere kann durch entsprechendes Ansteuern der Linsenanordnung erreicht werden, dass von an der Hintergrund-Wiedergabeeinrichtung wiedergegebenen Lichtquellen, die in einem dem virtuellen Hintergrund entsprechenden realen Hintergrund einen gerichteten Lichtstrahl emittieren, auch an der Hintergrund-Wiedergabeeinrichtung ein fokussierter Lichtstrahl emittiert wird. Ferner kann durch Aufweiten des von Bildpunktelementen emittierten Lichts, welche zur Wiedergabe eines Motivs dienen, das in dem realen Hintergrund Licht isotrop reflektiert, erreicht werden, dass diese Motive auch in der wiedergegebenen Darstellung scheinbar Licht isotrop emittierend dargestellt sind, um das Motiv mit einer natürlichen Strahlcharakteristik wiedergeben zu können.

Ferner kann es bei einigen Ausführungsformen vorgesehen sein, dass das von den Bildpunktelementen emittierte Licht durch Ansteuern der Linsenanordnung aufweitbar ist. Insbesondere kann von einem jeweiligen Bildpunktelement emittiertes Licht durch eine Ansteuerung der Linsenanordnung wahlweise aufgeweitet werden, um eine breite Lichtemission in dem virtuellen Bildaufnahmestudio zu erreichen.

Durch ein solches Aufweiten und/oder Streuen des emittierten Lichts kann zudem insbesondere einer weiteren bei der Nutzung von Hintergrund-Wiedergabeeinrichtungen zum Wiedergeben von Darstellungen virtueller Hintergründe für eine unmittelbare Kameraaufnahme auftretenden Problematik begegnet werden, welche insbesondere bei einer Abbildung der in einem regelmäßigen Raster von Bildpunktelementen wiedergegebenen Darstellungen des virtuellen Hintergrunds durch eine digitale Kamera entstehen kann. Eine solche digitale Kamera kann einen Bildsensor mit mehreren lichtempfindlichen Sensorelementen aufweisen, die in mehreren Zeilen und Spalten und somit ebenfalls in einem regelmäßigen orthogonalen Raster angeordnet sein können. Indem jedoch sowohl die Darstellung des virtuellen Hintergrunds als auch das lichtempfindliche Element der Kamera, der Bildsensor, ein regelmäßiges Raster aufweisen können, kann es in einer von der Kamera erzeugten Abbildung des virtuellen Hintergrunds zu Überlagerungen der beiden Raster kommen, die sich als ein Moiré-Effekt und/oder Alias-Effekt in der von der Kamera erzeugten Abbildung bzw. bei einer Wiedergabe der von der Kamera erzeugten Abbildung niederschlagen können. Die von der Kamera erzeugte Abbildung kann daher durch die Überlagerung der beiden regelmäßigen Raster geometrische Muster enthalten, die in der Darstellung des virtuellen Hintergrunds und/oder dem virtuellen Bildaufnahmestudio nicht enthalten sind. Durch ein Aufweiten des von den Bildpunktelementen emittierten Lichts kann jedoch das regelmäßige Raster der Bildpunktelemente gewissermaßen gebrochen werden, sodass eine Überlagerung mit einem regelmäßigen Raster der lichtempfindlichen Sensorelemente einer Kamera und das Entstehen von Moiré-Effekten in einer von der Kamera erzeugten Abbildung vermieden und/oder reduziert werden können.

Bei einigen Ausführungsformen kann jede der Vielzahl von Linsen einen elektrischen Polymeraktor umfassen. Ein solcher elektrischer Polymeraktor kann beispielsweise auch als elektroaktives Polymer und/oder elektrostriktives Polymer bezeichnet werden.

Die Ausbildung der Linsen mit einem elektrischen Polymeraktor ermöglicht es insbesondere, durch Anlegen einer elektrischen Spannung an den Polymeraktor dessen Form zu verändern und dadurch beispielsweise auf die Form der zugeordneten Linse und/oder deren Ausrichtung und/oder deren Position einzuwirken. Insbesondere kann eine solche Formänderung des Polymeraktors bereits durch geringe Spannungen erreicht werden, sodass eine präzise und direkte Steuerung der Linsenanordnung und/oder der Linsen ermöglicht werden kann, um beispielsweise eine Linsenform ohne relevante Zeitverzögerungen und beispielsweise im Bereich von Millisekunden situationsabhängig anpassen zu können. Insbesondere kann durch die Ausbildung der Linsen mit einem Polymeraktor zudem eine Veränderung von Linsenformen und/oder Ausrichtungen und/oder Positionen bei kleiner Ausbildung der Linsen erreicht werden, sodass die Linsen beispielsweise als Mikrolinsen ausgebildet und jeweiligen entsprechend klein ausgebildeten Bildpunktelementen, beispielsweise Leuchtdioden, zugeordnet werden können, um deren Strahlcharakteristik beeinflussen zu können.

Bei einigen Ausführungsformen können die Linsen eine jeweilige Linsenmembran aufweisen, welche durch Ansteuerung des Polymeraktors verformbar ist.

Eine solche Linsenmembran kann insbesondere den optisch aktiven Teil der Linse bilden, sodass durch eine Verformung der Linsenmembran die optischen Eigenschaften der Linse angepasst werden können. Insbesondere kann somit eine Verformung des Polymeraktors in Folge einer elektrischen Ansteuerung durch die Steuereinrichtung auf die Linsenmembran übertragen werden, um die optischen Eigenschaften der Linse zu verändern. Wie bereits erläutert, ermöglicht die Ausbildung der Linsen mit Polymeraktoren eine schnelle Ansteuerung und unmittelbare Reaktion im Sinne einer Verformung des Polymeraktors und in Antwort darauf auch der Linsenmembran, sodass die Linsen beispielsweise situationsabhängig und fortlaufend während einer Aufnahme in dem virtuellen Bildaufnahmestudio angepasst werden können. Zudem kann mittels eines elektrischen Polymeraktors durch entsprechende Wahl der Spannungen zu dessen Ansteuerung eine kontinuierliche Anpassung der Form der Linsenmembran erreicht werden, um beispielsweise durch eine kontinuierliche Veränderung der Linsenform auch eine Brennweite und/oder eine Brechkraft der Linse kontinuierlich und beliebig einstellen zu können.

Bei einigen Ausführungsformen kann die Linsenmembran zwischen zwei mit Fluid gefüllten Mikrofluidkammern angeordnet sein, wobei durch Ansteuern des Polymeraktors das Fluid einer jeweiligen Mikrofluidkamera selektiv gegen die Linsenmembran drückbar ist.

Durch Ansteuern des Polymeraktors kann somit insbesondere ein Druck in einer der Mikrofluidkammern generiert werden, um entsprechend an einer Seite einen Druck auf die Linsenmembran ausüben und die Linsenmembran dadurch verformen zu können. Um bei einer solchen Ausbildung der Linse eine möglichst kontrollierte Anpassung der Strahlcharakteristik eines jeweiligen zugeordneten Bildpunktelements zu ermöglichen, kann das Fluid insbesondere lichtdurchlässig sein und/oder einen Brechungsindex nahe Eins aufweisen. Die Beeinflussung der Strahlcharakteristik eines jeweiligen Bildpunktelements kann somit vornehmlich durch die Linsenmembran bestimmt sein. Insbesondere kann es sich bei dem Fluid um ein Öl handeln.

Durch einen wie vorstehend erläuterten Aufbau können die Linsen der Linsenanordnung insbesondere als Mikrolinsen ausgebildet werden, um jeweiligen, insbesondere ebenfalls klein ausgebildeten, Bildpunktelementen zugeordnet werden zu können. Beispielsweise können solche Linsen mit einer Öffnung von 3 mm ausgebildet werden und Abmessungen von etwa 10 mal 10 mm² aufweisen, die vornehmlich durch die Mikrofluidkammern bestimmt sein können. Zudem kann mit solchen Linsen beispielsweise eine Brechkraftvariation durch Verformung der Linsenmembran von 15 Dioptrien erreicht werden, wobei jedoch gegebenenfalls auch weitere Variationen erreichbar sein können.

Bei einigen Ausführungsformen kann eine Brennweite der Linsen einstellbar sein. Insbesondere kann eine Brechkraft der Linsen einstellbar sein.

Ferner kann es vorgesehen sein, dass die Brennweite jeder der Linsen individuell und/oder kontinuierlich einstellbar ist. Wie bereits erläutert, kann dies beispielsweise erfolgen, indem durch entsprechendes Ansteuern der Linsenanordnung eine Verformung der Linsen angesteuert wird, um etwa einen Krümmungsradius der Linse zu beeinflussen. Insbesondere kann dadurch, wie bereits erläutert, beispielsweise erreicht werden, für jedes Bildpunktelement, dem eine Linse zugeordnet ist, individuell eine Strahlcharakteristik des von dem Bildpunktelement emittierten Lichts zu beeinflussen.

Bei einigen Ausführungsformen können die Linsen als Zerstreuungslinsen ausgebildet sein. Insbesondere können die Linsen somit dazu ausgebildet sein, von den jeweiligen zugeordneten Bildpunktelementen emittiertes Licht aufzuweiten. Eine solche Aufweitung des Lichtstrahls kann es insbesondere ermöglichen, die vorstehend erläuterten Moiré-Effekte und/oder Alias-Effekte in einer von der Kamera erzeugten Abbildung der Darstellung des virtuellen Hintergrunds durch Überlagerung eines regelmäßigen Rasters der Bildpunktelemente mit einem regelmäßigen Raster von lichtempfindlichen Sensorelementen der Kamera zu vermeiden. Zudem kann ein solches Aufweiten des emittierten Lichts der Hintergrund-Wiedergabeeinrichtung beispielsweise in bestimmten Aufnahmesituationen und insbesondere zu einer möglichst umfassenden Beleuchtung des Bildaufnahmestudios und/oder des realen Motivs genutzt werden.

Bei einigen Ausführungsformen kann die Steuereinrichtung dazu ausgebildet sein, eine Position und/oder Ausrichtung der Linsen zu verändern. Beispielsweise kann die Steuereinrichtung dazu ausgebildet sein, durch Ansteuern der Linsenanordnung eine jeweilige Linse und/oder die Linsen der Linsenanordnung zu verkippen, um auch dadurch das von den Bildpunktelementen emittierte Licht zu beeinflussen und insbesondere zu lenken. Ebenso kann die Steuereinrichtung dazu ausgebildet sein, durch Ansteuern der Linsenanordnung eine Position einer jeweiligen Linse relativ zu dem zugeordneten Bildpunktelement zu verändern und die Linse beispielsweise auf das Bildpunktelement zu oder von dem Bildpunktelement weg zu bewegen. Dazu kann beispielsweise die Linse insgesamt bewegbar und/oder ausrichtbar sein, oder ein jeweiliges optisch wirksames Element der Linse, insbesondere die vorstehend erwähnte Linsenmembran, kann durch Ansteuern der Linsenanordnung und insbesondere eines Polymeraktors bewegbar und/oder ausrichtbar sein. Es kann jedoch auch vorgesehen sein, dass die optisch wirksamen Elemente der Linsen in einem jeweiligen Linsenrahmen angeordnet sind, wobei der Linsenrahmen beispielsweise kippbar und/oder linear bewegbar sein kann, um eine Position und/oder Ausrichtung der Linse und insbesondere des optisch wirksamen Elements der Linse relativ zu dem zugeordneten Bildpunktelement zu verändern.

Die Linsenanordnung kann bei einigen Ausführungsformen zumindest ein Linsenarray umfassen, welches mehrere miteinander verbundene Linsen aufweist. Beispielsweise kann die Linsenanordnung mehrere Linsen umfassen, welche als jeweilige Wafer ausgebildet und zu einem Linsenarray verbunden sind. Ferner kann die Linsenanordnung insbesondere ein einziges Linsenarray für das zumindest eine Paneel umfassen, welches beispielsweise bezogen auf die Bildpunktelemente des zumindest einen Paneels oberhalb der Bildpunktelemente angeordnet sein kann. Alternativ dazu kann die Linsenanordnung für das zumindest eine Paneel jedoch auch mehrere Linsenarrays umfassen, welche über das Paneel verteilt und/oder sich aneinander anschließend über den Bildpunktelementen angeordnet sein können.

Bei einigen Ausführungsformen kann das Linsenarray einen Linsenrahmen umfassen, in welchem die mehreren Linsen gehalten sind. Ein solcher Linsenrahmen kann insbesondere oberhalb der Bildpunktelemente angeordnet sein, um die von dem Linsenarray umfassten Linsen über den jeweiligen Bildpunktelementen anordnen zu können. Der Linsenrahmen kann insofern auch als ein Träger der Linsenanordnung und/oder der Linsen verstanden werden, an welchem die einzelnen Linsen gehalten und/oder an dem zumindest einen Paneel angebracht sind.

Der Linsenrahmen kann bei einigen Ausführungsformen lichtundurchlässig sein und/oder eine Antireflexbeschichtung aufweisen. Insbesondere kann das von den Bildpunktelementen emittierte Licht somit durch die von dem Linsenrahmen gehaltenen Linsen, jedoch nicht durch den Linsenrahmen und somit gezielt durch Ansteuern der Linsenanordnung beeinflussbar sein. Indem der Linsenrahmen ferner eine Antireflexbeschichtung aufweisen kann, kann verhindert werden, dass Reflexionen von dem Linsenrahmen die Wiedergabe der Darstellung des virtuellen Hintergrunds und/oder eine von der zugeordneten Kamera erzeugte Abbildung der Darstellung des virtuellen Hintergrunds beeinflussen und/oder stören.

Die Linsen des Linsenarrays können bei einigen Ausführungsformen durch Waferbonden miteinander verbunden sein. Insbesondere kann dies eine einfache Herstellung der Linsen bei kleiner Ausbildung der Linsen als Mikrolinsen ermöglichen, indem die jeweiligen Linsen als Wafer hergestellt und danach zu einem Linsenarray verbunden werden. Zudem können die vorstehend bereits genannten Mikrofluidkammern durch ein solches Waferbonden gebildet werden.

Bei einigen Ausführungsformen kann die aktive Beleuchtungseinrichtung mehrere Paneele umfassen, wobei jedes der mehreren Paneele rechteckig und randlos ausgebildet sein kann und wobei die mehreren Paneele in einer zumindest zweidimensionalen Matrix (plan oder gewölbt angeordnet sein können. Insbesondre kann jedes der mehreren Paneele und/oder das zumindest eine Paneel quadratisch ausgebildet sein. Die Hintergrund-Wiedergabeeinrichtung kann somit durch mehrere Paneele zusammengesetzt sein, wobei an jedem der mehreren Paneele beispielsweise ein jeweiliger Abschnitt der Darstellung des virtuellen Hintergrunds und durch die Zusammensetzung der mehreren Paneele letztlich die Darstellung des virtuellen Hintergrunds wiedergegeben werden kann. Indem die mehreren Paneele insbesondere randlos ausgebildet sein können, kann die Darstellung des virtuellen Hintergrunds auch an Übergängen zwischen zwei Paneelen ohne Unterbrechung an der Hintergrund-Wiedergabeeinrichtung wiedergegeben werden.

Die Erfindung betrifft ferner ein Verfahren zum Wiedergeben einer Darstellung eines virtuellen Hintergrunds mittels einer Hintergrund-Wiedergabeeinrichtung, insbesondere einer Hintergrund-Wiedergabeeinrichtung wie hierin offenbart, für eine Aufnahme mit einer Kamera in einem virtuellen Bildaufnahmestudio. Die Hintergrund-Wiedergabeeinrichtung weist eine aktive Beleuchtungseinrichtung, welche zumindest ein Paneel mit einer Vielzahl von Bildpunktelementen in einer zumindest zweidimensionalen Anordnung umfasst, und eine Linsenanordnung auf, welche für jedes Bildpunktelement der Vielzahl von Bildpunktelementen eine jeweilige individuell ansteuerbare Linse umfasst. Bei dem Verfahren wird die Darstellung des virtuellen Hintergrunds generiert, die Bildpunktelemente werden zu dem Wiedergeben der Darstellung des virtuellen Hintergrunds angesteuert und die Linsenanordnung wird zum Verändern einer Strahlcharakteristik der Bildpunktelemente angesteuert.

Wie bereits erläutert, kann durch ein solches Verfahren flexibel eine Darstellung eines virtuellen Hintergrunds in einem virtuellen Bildaufnahmestudio wiedergegeben werden, sodass die Darstellung und/oder der virtuelle Hintergrund unmittelbar mittels der zugeordneten Kamera abgebildet werden und der erzeugten Abbildung beispielsweise nicht nachträglich hinzugefügt werden muss. Das Anpassen der Strahlcharakteristik der Bildpunktelemente ermöglicht es zudem, die Wiedergabe der Darstellung des virtuellen Hintergrunds flexibel an bestimmte Aufnahmesituationen anzupassen und beispielsweise in bestimmten Aufnahmesituationen die Hintergrund-Wiedergabeeinrichtung und/oder Abschnitte der Hintergrund-Wiedergabeeinrichtung zum Beleuchten und beispielsweise fokussierten Beleuchten des realen Motivs, etwa eines Schauspielers, zu nutzen. Es kann zudem vorgesehen sein, durch Ansteuern der Linsenanordnung die Strahlcharakteristik sämtlicher Bildpunktelemente, welchen eine jeweilige Linse zugeordnet ist, kollektiv anzupassen, oder die Linsen der Linsenanordnung können individuell ansteuerbar sein, um die Strahlcharakteristik jedes der zugeordneten Bildpunktelemente individuell anpassen zu können. Insbesondere kann die Linsenanordnung für jedes Bildpunktelement eine jeweilige Linse umfassen.

Bei einigen Ausführungsformen kann von den Bildpunktelementen emittiertes Licht durch Ansteuern der Linsenanordnung aufgeweitet werden. Hierdurch können insbesondere die vorstehend erwähnten Moiré-Effekte und/oder Alias-Effekte in einer von der Kamera erzeugten Abbildung der Darstellung des virtuellen Hintergrunds vermieden werden. Zudem kann beispielsweise durch ein solches Aufweiten eine gleichmäßige Ausleuchtung des virtuellen Bildaufnahmestudios erreicht werden.

Die wiedergegebene Darstellung des virtuellen Hintergrunds kann bei einigen Ausführungsformen mit einer Bildaktualisierungsfrequenz verändert werden und die Linsenanordnung kann für jede wiedergegebene Darstellung individuell angesteuert werden. Wie bereits erläutert, kann somit eine bildsynchrone Ansteuerung der Linsenanordnung erfolgen, um bei sich zeitlich verändernden wiedergegebenen Darstellungen des virtuellen Hintergrunds für jede Darstellung eine entsprechende Ansteuerung der Linsenanordnung vornehmen zu können.

Ferner wird bei dem erfindungsgemäßen Verfahren die Darstellung des virtuellen Hintergrunds mit der Kamera aufgenommen. Insbesondere kann somit in dem virtuellen Bildaufnahmestudio mittels einer zugeordneten Kamera eine Abbildung erzeugt werden, wobei die Kamera insbesondere mehrere aufeinanderfolgende Abbildungen zum Erstellen einer Bewegtbildsequenz aufnehmen kann. Bei diesen Abbildungen kann die Darstellung des virtuellen Hintergrunds mit der Kamera unmittelbar aufgenommen werden, sodass einer in dem virtuellen Bildaufnahmestudio aufgenommenen Szene, beispielsweise einem Schauspielszene für einen Kinofilm, nicht nachträglich ein Hintergrund, wie beispielsweise bei einer Green-Screen-Aufnahme, hinzugefügt werden muss.

Die Erfindung wird im Folgenden rein beispielhaft anhand von Ausführungsbeispielen in Bezug auf die Zeichnungen erläutert.

Es zeigen:
- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds, welche eine aktive Beleuchtungseinrichtung mit einer Vielzahl von Bildpunktelementen aufweist, und mit einer Kamera,
- Fig. 2: eine schematische Darstellung der für eine Aufnahme in dem Bildaufnahmestudio vorgesehenen Kamera,
- Fig. 3: eine schematische Darstellung einer Leuchtdiodeneinheit, welche drei individuell steuerbare Leuchtdioden umfasst,
- Fig. 4: eine schematische Darstellung eines Paneels der aktiven Beleuchtungseinrichtung sowie einer steuerbaren Linsenanordnung zum Anpassen einer Strahlcharakteristik der an dem Paneel angeordneten Bildpunktelemente der aktiven Beleuchtungseinrichtung und
- Fig. 5A bis 5D: eine jeweilige schematische Darstellung einer Linse des Linsensystems zur Veranschaulichung der Anpassung der Strahlcharakteristik eines Bildpunktelements.

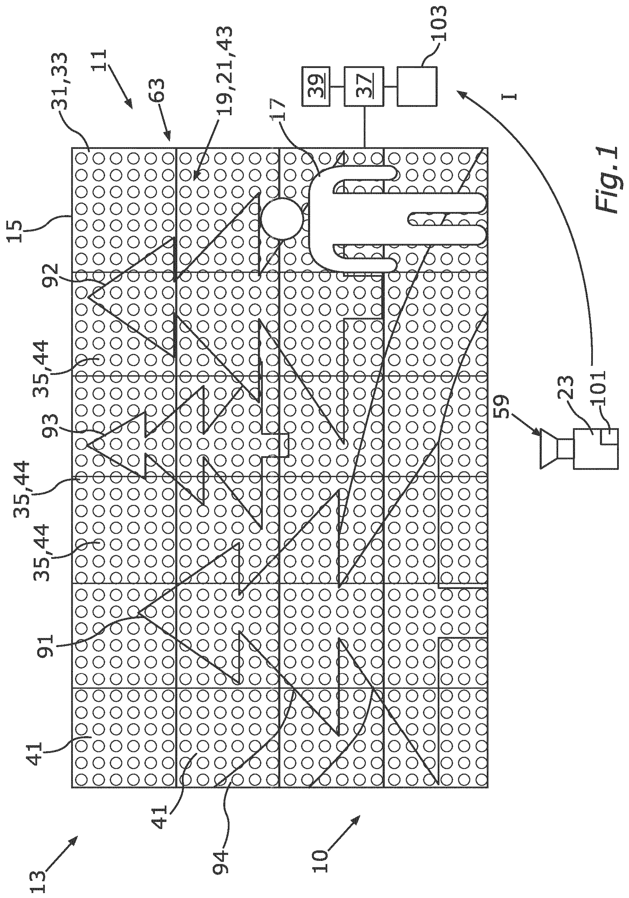

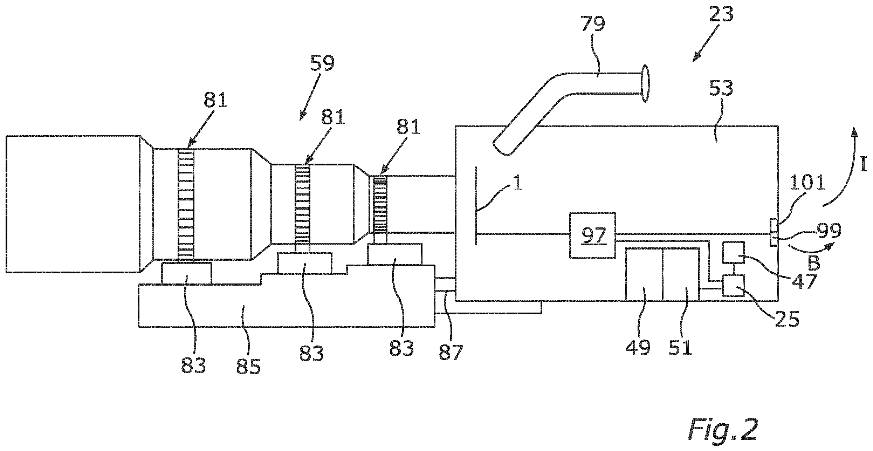

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 1 mit mehreren lichtempfindlichen Sensorelementen angeordnet sein, auf welche durch eine Blendenöffnung einer Blende eindringendes Licht mittels eines Linsensystems bzw. zumindest einer Linse zum Erzeugen einer Abbildung geleitet werden kann (vgl. Fig. 2).

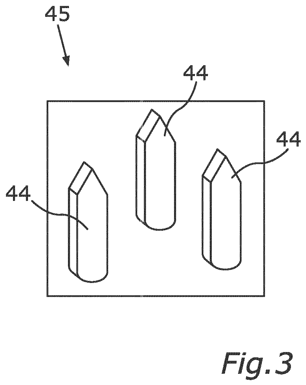

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung nebeneinander angeordnet sind. Beispielsweise können die Bildpunktelemente 35 als individuell ansteuerbare Leuchtdioden 44 oder als individuell ansteuerbare Leuchtdiodeneinheiten 45 ausgebildet sein, wobei jede einer solchen Leuchtdiodeneinheit 45 mehrere, insbesondere drei, Leuchtdioden 44 umfassen kann (vgl. Fig. 3). Insbesondere kann es vorgesehen sein, dass die Bildpunktelemente 35 als Leuchtdiodeneinheiten 45 mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit 45 kann zudem einen Farbmischer umfassen, um durch jeweiliges individuelles Ansteuern der Leuchtdioden 44 einer Leuchtdiodeneinheit 45 eine jeweilige von dem Bildpunktelement 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden. Insofern umfasst die aktive Beleuchtungseinrichtung 31 bei der gezeigten Ausführungsform mehrere Paneele 41.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf, welche mit einem Speicher 39 verbunden ist. In dem Speicher 39 kann insbesondere ein Modell des virtuellen Hintergrunds 21 gespeichert sein, so dass die Steuereinrichtung den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren.

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen 73 erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit zu steuern. Insbesondere können die Wiedergabeeinrichtung 49 und die Eingabeeinrichtung 51 von einem Touchscreen gebildet sein, über welchen dem Benutzer sowohl Informationen angezeigt als auch Benutzereingaben empfangen werden können.

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen aufweisen, die in mehreren Zeilen und Spalten angeordnet sein können. Ferner weist die Kamera 23 eine Ausleseschaltung 97 auf, welche dazu ausgebildet ist, die Signale der jeweiligen Sensorelemente auszulesen, aufzubereiten, zu digitalisieren und an bzw. über einen Signalausgang 99 auszugeben. Dazu kann die Ausleseschaltung 97 insbesondere Verstärker, Multiplexer, Analog-DigitalWandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann. Zudem ist die Steuereinrichtung 25 mit einem Speicher 47 verbunden und kann beispielsweise dazu ausgebildet sein, den Bilddatensatz B wahlweise in den Speicher 47 einzuschreiben oder über den Signalausgang 99 auszugeben.

Ferner weisen die Hintergrund-Wiedergabeeinrichtung 15 eine Schnittstelle 103 und die Kamera 23 eine Schnittstelle 101 auf, über welche insbesondere Informationen I von der Kamera 23 an die Hintergrund-Wiedergabeeinrichtung 15 übermittelbar sein können. Insbesondere kann die Steuereinrichtung 37 der Hintergrund-Wiedergabeeinrichtung 15 dazu ausgebildet sein, die aktive Beleuchtungseinrichtung 31 in Abhängigkeit von einer von der Kamera 23 empfangenen Information I zu steuern.

Die Hintergrund-Wiedergabeeinrichtung 15 kann somit insbesondere an mehreren Paneelen 41 angeordnete Bildpunktelemente 35 aufweisen, welche dazu ausgebildet sind, durch eine Emission von Licht die Darstellung 19 des virtuellen Hintergrunds 21 an der Hintergrund-Wiedergabeeinrichtung 15 wiederzugeben. Diese Bildpunktelemente 35 können insbesondere von einzelnen Leuchtdioden 44 oder von Leuchtdiodeneinheiten 45 gebildet sein, wie Fig. 3 veranschaulicht. Eine solche Leuchtdiodeneinheit 45 kann insbesondere drei Leuchtdioden 44 aufweisen, die zu einem Emittieren von Licht unterschiedlicher Farbe ausgebildet sind, so dass durch Mischen der jeweiligen Emissionsspektren der drei Leuchtdioden 44 bzw. entsprechendes Ansteuern der drei Leuchtdioden 44 durch die Steuereinrichtung 37 eine jeweilige von der Leuchtdiodeneinheit 45 und somit dem Bildpunktelement 35 emittierte Farbe eingestellt werden kann.

Während es die Ausbildung der Hintergrund-Wiedergabeeinrichtung 15 mit derartigen Bildpunktelementen 35 ermöglicht, flexibel die Darstellung 19 des virtuellen Hintergrunds 21 für eine Aufnahme mittels der zugeordneten Kamera 23 in dem Bildaufnahmestudio 13 wiederzugeben, so dass die Kamera 23 die Darstellung 19 des virtuellen Hintergrunds 21 insbesondere unmittelbar abbilden kann, kann eine Strahlcharakteristik S der Bildpunktelemente 35, beispielsweise eine Weite des von den Bildpunktelementen 35 abgestrahlten Lichts, grundsätzlich nicht unmittelbar an den Bildpunktelementen 35 beeinflusst werden. Vielmehr kann eine solche Strahlcharakteristik S durch die Anordnung der Bildpunktelemente 35 und/oder einen Typ bzw. eine Art der Bildpunktelemente 35 und beispielsweise der verwendeten Leuchtdioden 44 festgelegt sein. Dies schränkt jedoch die Gestaltungsmöglichkeiten bei der Wiedergabe der Darstellung 19 des virtuellen Hintergrunds 21 an der Hintergrund-Wiedergabeeinrichtung 15 ungewünscht ein und kann beispielsweise bei einer fokussierten Lichtemission von den Bildpunktelementen 35 zu Moiré-Effekten oder Alias-Effekten in einer von der Kamera 23 erzeugten Abbildung der Darstellung 19 des virtuellen Hintergrunds 21 führen, indem sich die regelmäßige Anordnung der Bildpunktelemente 35 mit einer regelmäßigen Anordnung von lichtempfindlichen Sensorelementen des Bildsensors 1 der Kamera 23, die insbesondere in Zeilen und Spalten angeordnet sein können, überlagern kann.

Um die Strahlcharakteristik S der Bildpunktelemente 35 jedoch flexibel und beispielsweise situationsabhängig beeinflussen zu können, weist die Hintergrund-Wiedergabeeinrichtung 15 eine steuerbare Linsenanordnung 61 auf, wobei die Steuereinrichtung 37 dazu ausgebildet ist, durch Ansteuern der Linsenanordnung 61 die Strahlcharakteristik S zumindest einiger Bildpunktelemente 35 anzupassen.

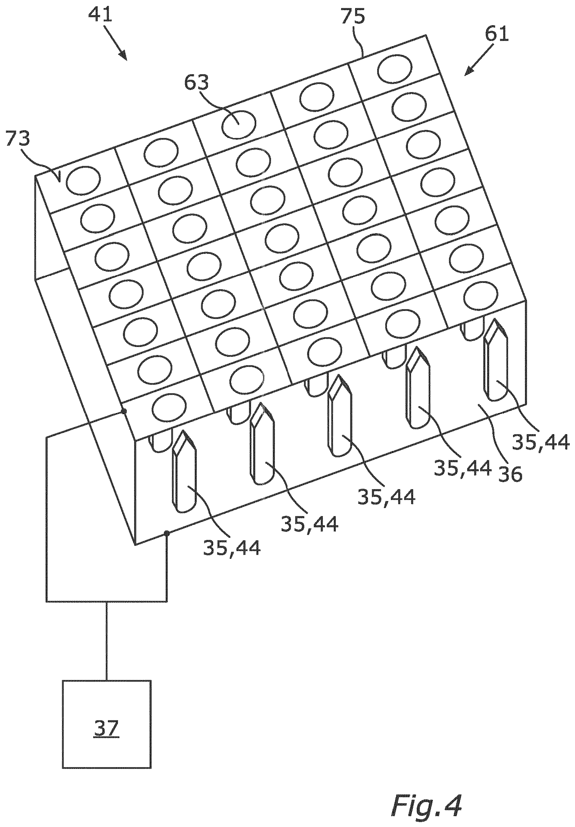

Wie Fig. 4 zeigt, umfasst die Linsenanordnung 61 dazu ein Linsenarray 73, in welchem mehrere Linsen 63 angeordnet sind. Das Linsenarray 73 umfasst einen Linsenrahmen 75, in welchem die Linse 63 gehalten sind und welcher an einem Bildpunktelementträger 36, auf welchem die Bildpunktelemente 35 angeordnet sind, abgestützt ist.

Bei der gezeigten Ausführungsform ist jedem der Bildpunktelemente 35 des Paneels 41, welche beispielhaft als individuelle Leuchtdioden 44 dargestellt sind, jedoch auch als Leuchtdiodeneinheiten 45 ausgebildet sein können, eine jeweilige Linse 63 zugeordnet, so dass durch Ansteuern der Linsenanordnung 61 die Strahlcharakteristik S sämtlicher Bildpunktelemente 35 anpassbar ist. Dazu kann es vorgesehen sein, dass sämtliche Linsen 63 der Linsenanordnung 61 individuell ansteuerbar sind, so dass auch die Strahlcharakteristik S jedes Bildpunktelements 35 individuell anpassbar sein kann, oder es kann vorgesehen sein, dass die Linsen 63 der Linsenanordnung 61 kollektiv ansteuerbar sind, um eine kollektive Strahlcharakteristik der Bildpunktelemente 35 der Hintergrund-Wiedergabeeinrichtung 15 und/oder eines Paneels 41 der Hintergrund-Wiedergabeeinrichtung 15 anpassen zu können.

Ferner ermöglicht es die Anordnung der Linsen 63 in dem Linsenarray 73, die einzelnen Linsen 63 auf Wafer-Basis herzustellen und durch Waferbonden zu dem Linsenarray 73 zu verbinden. Es kann beispielsweise vorgesehen sein, dass ein einziges Linsenarray 73 mit einer Vielzahl von Linsen 63 für ein Paneel 41 der Hintergrund-Wiedergabeeinrichtung 15 vorgesehen ist, wobei alternativ dazu auch mehrere Linsenarrays 73 über ein Paneel 41 verteilt und insbesondere sich aneinander anschließend an dem Bildpunktelementträger 36 angebracht sein können.

Eine solche Ausbildung der Linsenanordnung 61 mit auf Wafer-Basis herstellbaren Linsen 63 ermöglicht es zudem, die Linsen 63 mit geringer Ausdehnung auszubilden, um die Linsen 63 einem jeweiligen Bildpunktelement 35 und insbesondere einer jeweiligen Leuchtdiode 44 oder einer jeweiligen Leuchtdiodeneinheit 45 zuordnen zu können. Beispielsweise können die Linsen 63 bzw. die entsprechenden Wafer dazu eine Ausdehnung von 10 x 10 mm² aufweisen. Um eine Störung der Wiedergabe der Darstellung 19 des virtuellen Hintergrunds 21 durch die Linsenanordnung 61 zu vermeiden, kann der Linsenrahmen 75 ferner lichtundurchlässig ausgebildet sein, so dass die Strahlcharakteristik S der Bildpunktelemente 35 zumindest vornehmlich durch die Linsen 63 und somit in kontrollierter Weise beeinflussbar sein kann. Zudem kann der Linsenrahmen 75 mit einer Antireflexbeschichtung beschichtet sein, um eine Reflexion von Licht und eine dadurch bedingte Störung der Wiedergabe der Darstellung 19 des virtuellen Hintergrunds 21 oder einer Abbildung, welche die Kamera 23 erzeugt, zu vermeiden.

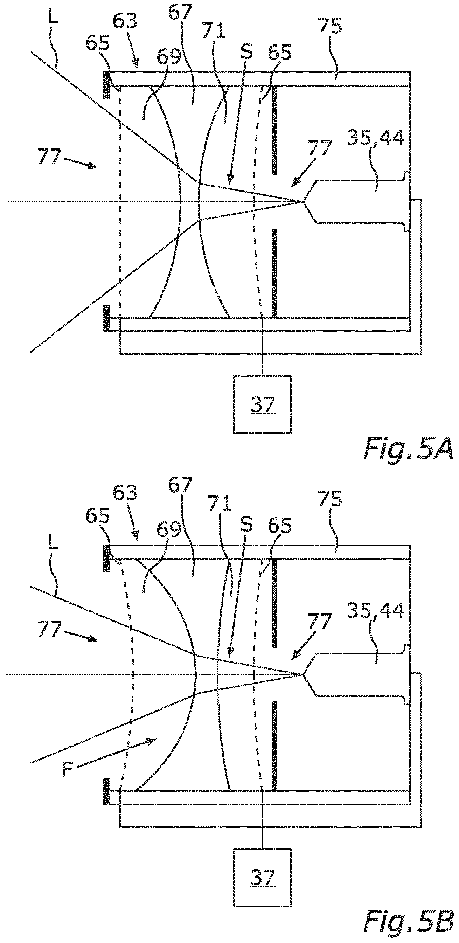

Darüber hinaus kann es vorgesehen sein, dass jedem der Bildpunktelemente 35 eine jeweilige Linse 63 zugeordnet ist. Dies kann es ermöglichen, die Strahlcharakteristik S von jedem der Bildpunktelemente 35 des Paneels 41 individuell anzupassen. Wie bereits erläutert, kann dazu insbesondere jede Linse 63 der Linsenanordnung 61 individuell mittels der Steuereinrichtung 37 ansteuerbar sein. Die Fig. 5A bis 5D veranschaulichen eine mögliche Ausführungsform der Linsen 63, welche eine derartige individuelle Ansteuerung der Linsen 63 ermöglicht, um gezielt die Strahlcharakteristik S eines jeweiligen Bildpunktelements 35 beeinflussen zu können.

Die in Fig. 5A gezeigte Linse 63 weist eine verformbare Linsenmembran 67 auf, welche das optisch aktive Element der Linse 63 bildet. Die Linsenmembran 67 ist zwischen zwei mit Fluid gefüllten Mikrofluidkammern 69 und 71 angeordnet und die Linse 63 umfasst gestrichelt dargestellte Polymeraktoren 65, welche als elektroaktive bzw. elektrostriktive Polymere durch eine elektrische Ansteuerung durch die Steuereinrichtung 37 verformbar sind. Insofern kann die Steuereinrichtung 37 dazu ausgebildet sein, die Linsenanordnung 61 elektrisch anzusteuern. Insbesondere kann die Linsenanordnung 61 durch Anlegen eines elektrischen Feldes steuerbar sein. Die Ausbildung der Linsen 63 mit Polymeraktoren 65 ermöglicht zudem eine Ansteuerung der Linsen 63 und der Linsenanordnung 61 durch geringe Spannungen, so dass Einstellungen der Linsen 63 innerhalb einiger Millisekunden, beispielsweise innerhalb von 10 Millisekunden oder innerhalb von 20 Millisekunden, veränderbar sein können. Durch eine solch schnelle Ansteuerung der Linsen 63 können die Linsen 63 zudem insbesondere bildsynchron angesteuert werden, um die Ansteuerung der Linsenanordnung 61 beispielsweise bei einer Wiedergabe von zeitlich variierenden Darstellungen 19 des virtuellen Hintergrunds 21 für jede der wiedergegebenen Darstellungen 19 individuell anpassen zu können.

Ferner weist die Linse 63 zwei einander gegenüberliegende Öffnungen 77 auf, durch welche ein von dem zugeordneten Bildpunktelement 35 emittierter Lichtstrahl L in die Fluidkammer 71 eintreten und aus der Fluidkammer 69 heraustreten kann, um die Darstellung 19 des virtuellen Hintergrunds 21 wiederzugeben. Insbesondere kann die der Fluidkammer 69 zugeordnete Öffnung 77 einen Durchmesser von 3 mm aufweisen. Das in den Mikrofluidkammern 69 und 71 enthaltene Fluid kann insbesondere lichtdurchlässig sein und einen Brechungsindex nahe Eins aufweisen, so dass die Beeinflussung der Strahlcharakteristik S des Bildpunktelements 35 im Wesentlichen durch die Linsenmembran 67 bestimmt sein kann. Insbesondere kann es sich bei dem in den Mikrofluidkammern 69 und 71 enthaltenen Fluid um ein Öl handeln.

Wie Fig. 5A zeigt, ist die dort veranschaulichte Linse 63 als Zerstreuungslinse ausgebildet und/oder zum Wirken als Zerstreuungslinse angesteuert, so dass die von dem Bildpunktelement 35 emittierten Lichtstrahlen L durch die Linse 63 aufgeweitet werden und die Strahlcharakteristik S des Bildpunktelements 35 insofern im Sinne einer Aufweitung verändert wird. Durch eine solche Aufweitung kann insbesondere das regelmäßige Raster der Bildpunktelemente 35 an dem Paneel 41 gewissermaßen durchbrochen werden, um beispielsweise eine Überlagerung dieses Rasters mit einer regelmäßigen Anordnung von Sensorelementen des Bildsensors 1 der Kamera 23 und dadurch entstehende Abbildungsfehler in einer von der Kamera 23 erzeugten Abbildung zu verhindern.

Um die Strahlcharakteristik S des Bildpunktelements 35 jedoch auch variabel verändern zu können, kann die Linsenmembran 67 insbesondere durch eine elektrische Ansteuerung der Polymeraktoren 62 verformbar sein. Dies ist in Fig. 5B veranschaulicht. Insbesondere kann durch eine Verformung der Polymeraktoren 65 das Fluid einer jeweiligen der Mikrofluidkammern 69 und 71 selektiv gegen die Linsenmembran 67 gedrückt werden, um dadurch die Form F der Linsenmembran 67 anzupassen. Beispielsweise kann die Linsenmembran 67 dadurch derart verformt werden, dass die Aufweitung der Lichtstrahlen 11 im Vergleich zu der in Fig. 5A gezeigten Ansteuerung bzw. Form F reduziert wird. Es kann auch vorgesehen sein, dass die Linsenmembran 67 derart verformbar ist, dass die Linse 63 als Sammellinse wirken kann, um beispielsweise einen fokussierten Lichtstrahl L von dem Bildpunktelement 35 aussenden zu können. Dies kann insbesondere vorgesehen sein, wenn die Hintergrund-Wiedergabeeinrichtung 15 dazu ausgebildet ist, das reale Motiv 17 auch zu beleuchten und beispielsweise abschnittsweise als Beleuchtung des virtuellen Bildaufnahmestudios 13 zu fungieren. Durch entsprechendes Fokussieren der von den Bildpunktelementen 35 eines solchen Abschnitts emittierten Lichtstrahlen L kann somit insbesondere ein Spotlight, beispielsweise auf das reale Motiv 17, gerichtet werden. Insbesondere kann die Steuereinrichtung 37 somit dazu ausgebildet sein, durch Ansteuern der Linsenanordnung 61 einen Fokuswert, eine Brennweite und/oder eine Brechkraft der Linsen 63 zu verändern.

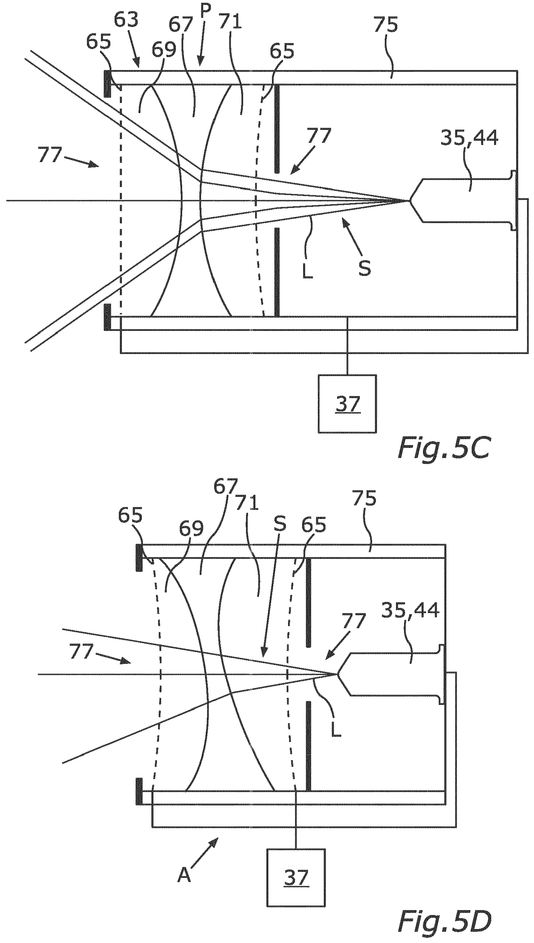

Zudem kann die Steuereinrichtung 37 dazu ausgebildet sein, die Strahlcharakteristik S des Bildpunktelements 35 zu verändern, indem die Position P der Linse 63 durch Ansteuern der Linsenanordnung 61 angepasst wird. In Fig. 5C ist dazu beispielhaft veranschaulicht, dass ein Abstand zwischen der Linse 63 bzw. der Linsenmembran 67 und dem Bildpunktelement 35 bzw. der Leuchtdiode 44 durch teleskopartiges Bewegen des Linsenrahmens 75 veränderbar ist. Ein solches Ausfahren der Linse 63 über den Linsenrahmen 75 kann insbesondere durch Ansteuern der Linsenanordnung 61 mittels der Steueranordnung 37 für jede Linse 63 der Linsenanordnung 61 individuell einstellbar sein. Es kann jedoch auch vorgesehen sein, dass beispielsweise die Linsenmembran 67 in den Fluidkammern 69 und 71, insbesondere durch Ansteuern der Polymeraktoren 65, verschiebbar ist, um den Abstand zwischen der Linsenmembran 67 und dem Bildpunktelement 35 zu verändern und einstellen zu können.

Darüber hinaus kann die Steuereinrichtung dazu ausgebildet sein, eine Ausrichtung A der Linse 63 und/oder der Linsenmembran 67 zu verändern, um die Strahlcharakteristik S des Bildpunktelements 35 zu beeinflussen. Dies ist in Fig. 5D gezeigt, in welcher die Linsenmembran 67 durch entsprechendes Ansteuern der Polymeraktoren 65 gegenüber einer zu den Öffnungen 77 parallelen Ausrichtung verkippt ist. Durch eine solche Verkippung können die von dem Bildpunktelement 35 emittierten Lichtstrahlen L insbesondere gerichtet werden, um beispielsweise ein Spotlight auf ein reales Motiv 17 und insbesondere einen Schauspieler richten zu können. Alternativ zu einem Verkippen der Linsenmembran 67 kann es auch vorgesehen sein, dass die Steuereinrichtung 37 dazu ausgebildet ist, die Linse 63 insgesamt in dem Linsenrahmen 75 zu verkippen, um dadurch auch die Ausrichtung der Linsenmembran 67 zu verändern.

Insbesondere kann es eine solche Linsenanordnung 61 somit ermöglichen, die Strahlcharakteristik S der Bildpunktelemente 35 der Hintergrund-Wiedergabeeinrichtung 15 anzupassen und dadurch die Gestaltungsmöglichkeiten zu erweitern. Zudem kann es eine Ausbildung der Linsen 63 als Mikrolinsen ermöglichen, jedem der Bildpunktelemente 35 und insbesondere jeder Leuchtdiode 44 eine jeweilige Linse 63 zuzuordnen, die individuell ansteuerbar ist, um die Strahlcharakteristik S jedes Bildpunktelements 35 individuell anpassen zu können. Darüber hinaus kann eine Ansteuerung über die Polymeraktoren 65 eine unmittelbare Veränderung der Form F, der Position P und/oder der Ausrichtung A der Linsenmembran 67 generieren, so dass die Strahlcharakteristik S eines jeweiligen zugeordneten Bildpunktelements 35 insbesondere dynamisch während einer Aufnahme mittels der zugeordneten Kamera 23 veränderbar sein kann.

### Bezugszeichenliste

- 1: Bildsensor
- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 21: virtueller Hintergrund
- 23: Kamera
- 31: Beleuchtungseinrichtung
- 33: LED-Wand
- 35: Bildpunktelement
- 36: Bildpunktelementträger
- 37: Steuereinrichtung
- 39: Speicher
- 41: Paneel
- 43: dreidimensionale Szene
- 44: Leuchtdiode
- 45: Leuchtdiodeneinheit
- 47: Speicher
- 49: Wiedergabeeinrichtung
- 51: Eingabeeinrichtung
- 53: Kamerakörper
- 59: Kameraobjektiv, Wechselobjektiv
- 61: Linsenanordnung
- 63: Linse
- 65: Polymeraktor
- 67: Linsenmembran
- 69: Mikrofluidkammer
- 71: Mikrofluidkammer
- 73: Linsenarray
- 75: Linsenrahmen
- 77: Öffnung
- 79: Sucher
- 81: Objektivring
- 83: Objektiv-Stellmotor
- 85: Objektivring-Antriebseinheit
- 87: Haltestange
- 91: erstes Objekt
- 92: zweites Objekt
- 93: drittes Objekt
- 94: viertes Objekt
- 97: Ausleseschaltung
- 99: Signalausgang
- 101: Schnittstelle
- 103: Schnittstelle
- A: Ausrichtung
- B: Bilddatensatz
- F: Form
- L: Lichtstrahl
- P: Position
- S: Strahlcharakteristik

## Patentansprüche

1. Hintergrund-Wiedergabeeinrichtung (15) für ein virtuelles Bildaufnahmestudio (13), welche dazu ausgebildet ist, hinter einem realen Motiv (17) eine Darstellung (19) eines virtuellen Hintergrunds (21) für eine Kameraaufnahme (23) wiederzugeben, umfassend
- eine aktive Beleuchtungseinrichtung (31), welche zumindest ein Paneel (41) mit einer Vielzahl von Bildpunktelementen (35) in einer zumindest zweidimensionalen Anordnung umfasst, und
- eine Steuereinrichtung (37),
wobei die Steuereinrichtung (37) dazu ausgebildet ist, die aktive Beleuchtungseinrichtung (31) zum Wiedergeben der Darstellung (19) des virtuellen Hintergrunds (21) anzusteuern,
wobei die Hintergrund-Wiedergabeeinrichtung (15) dazu ausgebildet ist, zeitlich variierende Darstellungen (19) des virtuellen Hintergrunds (21) wiederzugeben, um die Darstellung (19) an sich verändernde Positionen einer Kamera (23) anzupassen, mit welcher eine Szene in dem virtuellen Bildaufnahmestudio (13) aufgenommen wird,
**dadurch gekennzeichnet, dass**
die Hintergrund-Wiedergabeeinrichtung (15) eine steuerbare Linsenanordnung (61) umfasst,
wobei die Steuereinrichtung (37) dazu ausgebildet ist, eine Strahlcharakteristik (S) zumindest einiger der Vielzahl von Bildpunktelementen (35) durch Ansteuern der Linsenanordnung (61) zu verändern.

2. Hintergrund-Wiedergabeeinrichtung (15) nach Anspruch 1,
wobei die Hintergrund-Wiedergabeeinrichtung (15) als eine LED-Wand (33) und die Bildpunktelemente (35) als Leuchtdioden (44) oder Leuchtdiodeneinheiten (45) ausgebildet sind; und/oder
wobei sich die Hintergrund-Wiedergabeeinrichtung (15) in einer vertikalen und/oder horizontalen Ausrichtung erstreckt; und/oder
wobei die Hintergrund-Wiedergabeeinrichtung (15) dazu ausgebildet ist, die Darstellung (19) des virtuellen Hintergrunds (21) während der Kameraaufnahme zeitlich zu variieren; und/oder
wobei die aktive Beleuchtungseinrichtung (31) eine Breite von zumindest 5 Meter und eine Höhe von zumindest 2 Meter aufweist; und/oder
wobei Hintergrund-Wiedergabeeinrichtung (15) zumindest abschnittsweise gekrümmt und/oder gewölbt ausgebildet ist; und/oder
wobei die aktive Beleuchtungseinrichtung (31) mehrere Paneele (41) umfasst, wobei jedes der mehreren Paneele (41) rechteckig und randlos ausgebildet ist, wobei die mehreren Paneele (41) in einer zumindest zweidimensionalen Matrix angeordnet sind.

3. Hintergrund-Wiedergabeeinrichtung (15) nach Anspruch 1 oder 2,
wobei die Steuereinrichtung (37) dazu ausgebildet ist, die Bildpunktelemente (35) des zumindest einen Paneels (41) individuell und/oder in Gruppen benachbarter Bildpunktelemente (35) zum Wiedergeben der Darstellung (19) des virtuellen Hintergrunds (21) anzusteuern; und/oder
wobei die Steuereinrichtung (37) dazu ausgebildet ist, die Linsenanordnung (61) elektrisch anzusteuern.

4. Hintergrund-Wiedergabeeinrichtung (15) nach einem der vorhergehenden Ansprüche,
wobei die Steuereinrichtung (37) dazu ausgebildet ist, die aktive Beleuchtungseinrichtung (31) dazu anzusteuern, die wiedergegebene Darstellung (19) des virtuellen Hintergrunds (21) mit einer Bildaktualisierungsfrequenz zu verändern, und
wobei die Steuereinrichtung (37) dazu ausgebildet ist, die Linsenanordnung (61) entsprechend der Bildaktualisierungsfrequenz anzusteuern.

5. Hintergrund-Wiedergabeeinrichtung (15) nach einem der vorhergehenden Ansprüche,
wobei die Linsenanordnung (61) eine Vielzahl von Linsen (63) umfasst, wobei jede Linse (63) zumindest einem jeweiligen Bildpunktelement (35) zugeordnet ist.

6. Hintergrund-Wiedergabeeinrichtung (15) nach Anspruch 5,
wobei jedem Bildpunktelement (35) eine jeweilige Linse (63) zugeordnet ist.

7. Hintergrund-Wiedergabeeinrichtung (15) nach Anspruch 5 oder 6,
wobei die Steuereinrichtung (37) dazu ausgebildet ist, jede der Vielzahl von Linsen (63) individuell anzusteuern.

8. Hintergrund-Wiedergabeeinrichtung (15) nach einem der Ansprüche 5 bis 7,
wobei jede der Vielzahl von Linsen (63) einen elektrischen Polymeraktor (65) umfasst.

9. Hintergrund-Wiedergabeeinrichtung (15) nach Anspruch 8,
wobei die Linsen (63) eine jeweilige Linsenmembran (67) aufweisen, welche durch Ansteuern des Polymeraktors (65) verformbar ist,
wobei die Linsenmembran (67) insbesondere zwischen zwei mit Fluid gefüllten Mikrofluidkammern (69, 71) angeordnet ist, wobei durch Ansteuern des Polymeraktors (65) das Fluid einer jeweiligen Mikrofluidkammer (69, 71) selektiv gegen die Linsenmembran (67) drückbar ist.

10. Hintergrund-Wiedergabeeinrichtung (15) nach einem der Ansprüche 5 bis 9,
wobei eine Brennweite der Linsen (63) einstellbar ist; und/oder
wobei die Linsen (63) als Zerstreuungslinsen ausgebildet sind.

11. Hintergrund-Wiedergabeeinrichtung (15) nach einem der Ansprüche 5 bis 10,
wobei die Steuereinrichtung (37) dazu ausgebildet ist, eine Position (P) und/oder Ausrichtung (A) der Linsen (63) zu verändern.

12. Hintergrund-Wiedergabeeinrichtung (15) nach einem der vorhergehenden Ansprüche,
wobei die Linsenanordnung (61) zumindest ein Linsenarray (73) umfasst, welches mehrere miteinander verbundene Linsen (63) aufweist,
wobei die Linsen (63) des Linsenarrays (73) insbesondere durch ein Waferbonden miteinander verbunden sind

13. Hintergrund-Wiedergabeeinrichtung (15) nach Anspruch 12,
wobei das Linsenarray (73) einen Linsenrahmen (75) umfasst, in welchem die mehreren Linsen (63) gehalten sind,
wobei der Linsenrahmen (75) insbesondere lichtundurchlässig ist und/oder insbesondere eine Antireflexbeschichtung aufweist.

14. Verfahren zum Wiedergeben einer Darstellung (19) eines virtuellen Hintergrunds (21) mittels einer Hintergrund-Wiedergabeeinrichtung (15) nach einem der vorhergehenden Ansprüche, für eine Aufnahme mit einer Kamera (23) in einem virtuellen Bildaufnahmestudio (13),
wobei die Hintergrund-Wiedergabeeinrichtung (15) eine aktive Beleuchtungseinrichtung (31), welche zumindest ein Paneel (41) mit einer Vielzahl von Bildpunktelementen (35) in einer zumindest zweidimensionalen Anordnung umfasst, und eine Linsenanordnung (61) aufweist, welche für jedes Bildpunktelement (35) der Vielzahl von Bildpunktelementen (35) eine jeweilige individuell ansteuerbare Linse (63) umfasst,
mit den Schritten:
- Generieren der Darstellung (19) des virtuellen Hintergrunds (21);
- Ansteuern der Bildpunktelemente (35) zum Wiedergeben der Darstellung (19) des virtuellen Hintergrunds (21);
**gekennzeichnet durch** den Schritt:
- Ansteuern der Linsenanordnung (61) zum Verändern einer Strahlcharakteristik (S) der Bildpunktelemente (35),
und ferner durch den Schritt:
- Aufnehmen der Darstellung (19) des virtuellen Hintergrunds (21) mit der Kamera (23).

15. Verfahren nach Anspruch 14,
wobei von den Bildpunktelementen (35) emittiertes Licht durch das Ansteuern der Linsenanordnung (61) aufgeweitet wird; und/oder
wobei die wiedergegebene Darstellung (19) des virtuellen Hintergrunds (21) mit einer Bildaktualisierungsfrequenz verändert wird, wobei die Linsenanordnung (61) entsprechend der Bildaktualisierungsfrequenz angesteuert wird.

## Claims

1. A background display device (15) for a virtual image recording studio (13) that is configured to display, behind a real subject (17), a representation (19) of a virtual background (21) for a camera recording (23), said background display device (15) comprising
- an active illumination apparatus (31) which comprises at least one panel (41) having a plurality of picture elements (35) in an at least two-dimensional arrangement; and
- a control device (37),
wherein the control device (37) is configured to control the active illumination apparatus (31) to display the representation (19) of the virtual background (21),
wherein the background display device (15) is configured to display time-varying representations (19) of the virtual background (12) in order to adapt the representation (19) to changing positions of a camera (23) by which a scene is recorded in the virtual image recording studio (13),
**characterized in that**
the background display device (15) comprises a controllable lens arrangement (61),
wherein the control device (37) is configured to change a beam characteristic (S) of at least some of the plurality of picture elements (35) by controlling the lens arrangement (61).

2. A background display device (15) in accordance with claim 1,
wherein the background display device (15) is configured as an LED wall (33) and the picture elements (35) are configured as light-emitting diodes (44) or light-emitting diode units (45); and/or
wherein the background display device (15) extends in a vertical and/or horizontal orientation; and/or
wherein the background display device (15) is configured to vary the representation (19) of the virtual background (21) in time during the camera recording; and/or
wherein the active illumination apparatus (31) has a width of at least 5 meters and a height of at least 2 meters; and/or
wherein the background display device (15) is at least sectionally curved and/or arched; and/or
wherein the active illumination apparatus (31) comprises a plurality of panels (41), wherein each of the plurality of panels (41) is formed as rectangular and without edges, and wherein the plurality of panels (41) are arranged in an at least two-dimensional matrix.

3. A background display device (15) in accordance with claim 1 or 2,
wherein the control device (37) is configured to control the picture elements (35) of the at least one panel (41) individually and/or in groups of adjacent picture elements (35) to display the representation (19) of the virtual background (21); and/or
wherein the control device (37) is configured to electrically control the lens arrangement (61).

4. A background display device (15) in accordance with any one of the preceding claims,
wherein the control device (37) is configured to control the active illumination apparatus (31) to change the displayed representation (19) of the virtual background (21) at an image refresh rate, and
wherein the control device (37) is configured to control the lens arrangement (61) in accordance with the image refresh rate.

5. A background display device (15) in accordance with any one of the preceding claims,
wherein the lens arrangement (61) comprises a plurality of lenses (63),
wherein each lens (63) is associated with at least one respective picture element (35).

6. A background display device (15) in accordance with claim 5,
wherein each picture element (35) is associated with a respective lens (63).

7. A background display device (15) in accordance with claim 5 or claim 6,
wherein the control device (37) is configured to individually control each of the plurality of lenses (63).

8. A background display device (15) in accordance with any one of the claims 5 to 7,
wherein each of the plurality of lenses (63) comprises an electrical polymer actuator (65).

9. A background display device (15) in accordance with claim 8,
wherein the lenses (63) have a respective lens membrane (67) which can be deformed by controlling the polymer actuator (65),
wherein the lens membrane (67) is in particular arranged between two microfluid chambers (69, 71) filled with fluid, wherein the fluid of a respective microfluid chamber (69, 71) can be selectively pressed against the lens membrane (67) by controlling the polymer actuator (65).

10. A background display device (15) in accordance with any one of the claims 5 to 9,
wherein a focal length of the lenses (63) is settable; and/or
wherein the lenses (26, 63) are configured as diverging lenses.

11. A background display device (15) in accordance with any one of the claims 5 to 10,
wherein the control device (37) is configured to change a position (P) and/or an orientation (A) of the lenses (63).

12. A background display device (15) in accordance with any one of the preceding claims,
wherein the lens arrangement (61) comprises at least one lens array (73) which has a plurality of lenses (63) connected to one another,
wherein the lenses (63) of the lens array (73) are in particular connected to one another by a wafer bonding.

13. A background display device (15) in accordance with claim 12,
wherein the lens array (73) comprises a lens frame (75) in which the plurality of lenses (63) are held,
wherein the lens frame (75) is in particular impermeable to light and/or in particular has an anti-reflective coating.

14. A method of displaying a representation (19) of a virtual background (21) by means of a background display device (15) in accordance with any one of the preceding claims for a recording by a camera (23) in a virtual image recording studio (13),
wherein the background display device (15) has an active illumination apparatus (31), which comprises at least one panel (41) having a plurality of picture elements (35) in an at least two-dimensional arrangement, and a lens arrangement (61) which comprises a respective individually controllable lens (63) for each picture element (35) of the plurality of picture elements (35),
comprising the steps:
- generating the representation (19) of the virtual background (21);
- controlling the picture elements (35) to display the representation (19) of the virtual background (21);
**characterized by** the step:
- controlling the lens arrangement (61) to change a beam characteristic (S) of the picture elements (35),
and further by the step:
- recording the representation (19) of the virtual background (21) using the camera (23).

15. A method in accordance with claim 14,
wherein light emitted by the picture elements (35) is expanded by controlling the lens arrangement (61); and/or
wherein the displayed representation (19) of the virtual background (21) is changed at an image refresh rate, wherein the lens arrangement (61) is controlled in accordance with the image refresh rate.

## Revendications

1. Dispositif de reproduction d'arrière-plan (15) pour un studio de prise de vue virtuel (13), qui est conçu pour reproduire une représentation (19) d'un arrière-plan virtuel (21) derrière un sujet réel (17) pour une prise de vue par une caméra (23), comprenant
- un dispositif d'éclairage actif (31) qui comprend au moins un panneau (41) ayant une pluralité d'éléments de pixel (35) selon une disposition au moins bidimensionnelle, et
- un dispositif de commande (37),
le dispositif de commande (37) étant conçu pour commander le dispositif d'éclairage actif (31) afin de reproduire la représentation (1) de l'arrière-plan virtuel (21),
le dispositif de reproduction d'arrière-plan (15) étant conçu pour reproduire des représentations (19) de l'arrière-plan virtuel (21) variables dans le temps afin d'adapter la représentation (19) à des positions variables d'une caméra (23) au moyen de laquelle une scène est enregistrée dans le studio de prise de vue virtuel (13),
**caractérisé en ce que**
le dispositif de reproduction d'arrière-plan (15) comprend un ensemble de lentilles (61) commandable,
le dispositif de commande (37) étant conçu pour modifier une caractéristique de faisceau (S) d'au moins quelques-uns de la pluralité d'éléments de pixel (35) en commandant l'ensemble de lentilles (61).

2. Dispositif de reproduction d'arrière-plan (15) selon la revendication 1,
dans lequel le dispositif de reproduction d'arrière-plan (15) est conçu comme un écran de DELs (33), et les éléments de pixel (35) sont conçus comme des diodes électroluminescentes (44) ou comme des unités de diodes électroluminescentes (45) ; et/ou
le dispositif de reproduction d'arrière-plan (15) s'étend selon une orientation verticale et/ou horizontale ; et/ou
le dispositif de reproduction d'arrière-plan (15) est conçu pour modifier dans le temps la représentation (19) de l'arrière-plan virtuel (21) pendant la prise de vue par la caméra ; et/ou
le dispositif d'éclairage actif (31) a une largeur d'au moins 5 mètres et une hauteur d'au moins 2 mètres ; et/ou
le dispositif de reproduction d'arrière-plan (15) est au moins localement incurvé et/ou bombé ; et/ou
le dispositif d'éclairage actif (31) comprend plusieurs panneaux (41), chacun desdits plusieurs panneaux (41) étant de forme rectangulaire et sans bordure, lesdits plusieurs panneaux (41) étant agencés selon une matrice au moins bidimensionnelle.

3. Dispositif de reproduction d'arrière-plan (15) selon la revendication 1 ou 2,
dans lequel le dispositif de commande (37) est conçu pour commander les éléments de pixel (35) dudit au moins un panneau (41) individuellement et/ou par groupes d'éléments de pixel (35) voisins pour reproduire la représentation (19) de l'arrière-plan virtuel (21) ; et/ou
le dispositif de commande (37) est conçu pour commander électriquement l'ensemble de lentilles (31).

4. Dispositif de reproduction d'arrière-plan (15) selon l'une des revendications précédentes,
dans lequel le dispositif de commande (37) est conçu pour commander le dispositif d'éclairage actif (31) afin de modifier la représentation reproduite (19) de l'arrière-plan virtuel (21) à une fréquence de rafraîchissement d'image, et
le dispositif de commande (37) est conçu pour commander l'ensemble de lentilles (61) selon la fréquence de rafraîchissement d'image.

5. Dispositif de reproduction d'arrière-plan (15) selon l'une des revendications précédentes,
dans lequel l'ensemble de lentilles (61) comprend une pluralité de lentilles (63), chaque lentille (63) étant associée à au moins un élément de pixel (35) respectif.

6. Dispositif de reproduction d'arrière-plan (15) selon la revendication 5,
dans lequel une lentille respective (63) est associée à chaque élément de pixel (35).

7. Dispositif de reproduction d'arrière-plan (15) selon la revendication 5 ou 6,
dans lequel le dispositif de commande (37) est conçu pour commander individuellement chacune de la pluralité de lentilles (63).

8. Dispositif de reproduction d'arrière-plan (15) selon l'une des revendications 5 à 7,
dans lequel chacune de la pluralité de lentilles (63) comprend un actionneur polymère (65) électrique.

9. Dispositif de reproduction d'arrière-plan (15) selon la revendication 8,
dans lequel les lentilles (63) comportent une membrane de lentille respective (67) qui peut être déformée par commande de l'actionneur polymère (65),
la membrane de lentille (67) est disposée en particulier entre deux micro-chambres à fluide (69, 71) remplies de fluide, le fluide d'une micro-chambre à fluide respective (69, 71) pouvant être pressé de manière sélective contre la membrane de lentille (67) par commande de l'actionneur polymère (65).

10. Dispositif de reproduction d'arrière-plan (15) selon l'une des revendications 5 à 9,
dans lequel une distance focale des lentilles (63) est réglable ; et/ou les lentilles (63) sont conçues comme des lentilles divergentes.

11. Dispositif de reproduction d'arrière-plan (15) selon l'une des revendications 5 à 10,
dans lequel le dispositif de commande (37) est conçu pour modifier une position (P) et/ou une orientation (A) des lentilles (63).

12. Dispositif de reproduction d'arrière-plan (15) selon l'une des revendications précédentes,
dans lequel l'ensemble de lentilles (61) comprend au moins un réseau de lentilles (73) qui présente plusieurs lentilles (63) reliées entre elles,
en particulier, les lentilles (63) du réseau de lentilles (73) sont reliées entre elles par un collage sur plaquettes (wafer bonding).

13. Dispositif de reproduction d'arrière-plan (15) selon la revendication 12,
dans lequel le réseau de lentilles (73) comprend un cadre de lentilles (75)
dans lequel sont maintenues lesdites plusieurs lentilles (63),
en particulier, le cadre de lentilles (75) est opaque et/ou présente en particulier un revêtement antireflet.

14. Procédé pour reproduire une représentation (19) d'un arrière-plan virtuel (21) à l'aide d'un dispositif de reproduction d'arrière-plan (15) selon l'une des revendications précédentes, pour une prise de vue à l'aide d'une caméra (23) dans un studio de prise de vue virtuel (13),
le dispositif de reproduction d'arrière-plan (15) comprenant un dispositif d'éclairage actif (31) qui comprend au moins un panneau (41) ayant une pluralité d'éléments de pixel (35) selon une disposition au moins bidimensionnelle, et un ensemble de lentilles (61) qui comprend, pour chaque élément de pixel (35) de la pluralité d'éléments de pixel (35), une lentille respective (63) pouvant être commandée individuellement,
comprenant les étapes consistant à :
- générer la représentation (19) de l'arrière-plan virtuel (21) ;
- commander les éléments de pixel (35) afin de reproduire la représentation (19) de l'arrière-plan virtuel (21) ;
**caractérisé par** l'étape consistant à :
- commander l'ensemble de lentilles (61) afin de modifier une caractéristique de faisceau (S) des éléments de pixel (35),
et par l'étape consistant à :
- enregistrer la représentation (19) de l'arrière-plan virtuel (21) à l'aide de la caméra (23).

15. Procédé selon la revendication 14,
dans lequel la lumière émise par les éléments de pixel (35) est élargie par commande de l'ensemble de lentilles (61) ; et/ou
la représentation reproduite (19) de l'arrière-plan virtuel (21) est modifiée à une fréquence de rafraîchissement d'image, l'ensemble de lentilles (61) étant commandé en fonction de la fréquence de rafraîchissement d'image.
